# EUROPEAN PATENT SPECIFICATION

(11) **EP 4 228 057 B1**
(45) Date of publication and mention of the grant of the patent: **14.10.2026**
(21) Application number: 21955579.4
(22) Date of filing: 06.09.2021
(51) Int. Cl.: H01M 10/61

(54) **BATTERY HEATING DEVICE, AND CONTROL METHOD, CONTROL CIRCUIT AND POWER DEVICE THEREFOR**
BATTERIEHEIZVORRICHTUNG UND STEUERUNGSVERFAHREN, STEUERSCHALTUNG UND LEISTUNGSVORRICHTUNG DAFÜR
DISPOSITIF DE CHAUFFAGE DE BATTERIE ET PROCÉDÉ DE COMMANDE, CIRCUIT DE COMMANDE ET DISPOSITIF D'ALIMENTATION POUR CELUI-CI

(43) Date of publication of application: 16.08.2023
(73) Proprietor: Contemporary Amperex Technology (Hong Kong) Limited, Central, Central And Western District (HK)
(72) Inventor: HUANG, Xiaojian, Ningde, Fujian 352100 (CN); PAN, Xianxi, Ningde, Fujian 352100 (CN); DAN, Zhimin, Ningde, Fujian 352100 (CN)
(74) Representative: Rowlands, Stuart Michael
(86) International application number: PCT/CN2021/116736
(87) International publication number: WO 2023/029048

(56) References cited:
- CN-A- 109 962 660
- CN-A- 110 116 653
- CN-A- 110 116 653
- CN-A- 113 506 934
- CN-U- 212 587 580
- JP-A- 2016 170 000
- US-A1- 2011 144 861
- US-A1- 2011 144 861

## Description

### Technical Field

The present application relates to the technical field of batteries, and in particular to a battery heating device, a control method for a battery heating device, a control circuit for a battery heating device, and a power device.

### Background Art

Due to the advantages of being high in energy density, recyclable in charging, and safe and environmentally friendly, traction batteries are widely applied in the fields of new energy vehicles, consumer electronics, energy storage systems, etc.

However, traction batteries may be subject to certain restrictions when used in a low temperature environment. Specifically, in a low temperature environment, the discharge capacity of a traction battery may be significantly reduced, and the battery is not able to be charged. Therefore, it is required to heat the traction battery in the low temperature environment, in order to allow for normal use of the traction battery. How to improve the heating efficiency of a traction battery has become an urgent problem to be solved.

US2011/144861A1 relates to an electronic circuit configured to operate in any of a plurality of charging and heating modes for two batteries, a primary battery and a secondary battery. The electronic circuit includes a plurality of switch and diode pairs in a stacked configuration. The stacks of switch and diode pairs are connected to an inductor, to a plurality of mode control switches, and the two batteries. The mode control switches are used to set the modes, which include a charging mode, a self-heating, a power exchange-heating mode, and a direct power transfer mode.

CN110116653A relates to an electric vehicle driving system, a driving circuit and an electric vehicle battery heating method. The electric vehicle driving system comprises a first controller, a power supply unit and an inverter circuit. The power supply unit includes two battery packs. When electric vehicle batteries are heated, one ends of the two battery packs are independent of each other, and the other ends of the two battery packs are collinear. The electric vehicle battery heating method comprises the steps that opening and closing of three bridge arms of the inverter circuit are controlled through the first controller, the two battery packs are charged and discharged mutually with the assistance of a motor coil, and the power supply unit is further enabled to be polarized.

### Summary of the Invention

Embodiments of the present application provide a system as set out in claim 1, a control method for a battery heating device a set out in claim 6, and a power device as set out in claim 13, which can improve the heating efficiency of a traction battery.

In a first aspect, there is provided a battery heating device, which is connected to a traction battery and configured to heat the traction battery, where the traction battery includes a first battery cell and a second battery cell. The battery heating device includes:
a heating module including a first bridge arm, a second bridge arm, and an energy storage element; and
a control module configured to control the first bridge arm and the second bridge arm, to form a circuit for discharging from the first battery cell to the energy storage element and a circuit for charging from the energy storage element and the first battery cell to the second battery cell, and/or to form a circuit for discharging from the second battery cell to the energy storage element and a circuit for charging from the energy storage element and the second battery cell to the first battery cell, for heating of the first battery cell and the second battery cell.

The battery heating device heats two battery cells at the same time. The battery heating device includes two bridge arms and an energy storage element. During charging and discharging, the two battery cells are connected in series. The two bridge arms are controlled to form a circuit for discharging from one of the battery cells to the energy storage element and a circuit for charging from the energy storage element and the battery cell to the other battery cell. In this way, the two battery cells are heated at the same time during the charging and discharging, and a relatively high heating efficiency is thus achieved.

In a possible implementation, a first end of the first bridge arm is connected to a first end of the first battery cell, a first end of the second bridge arm is connected to a first end of the second battery cell, and a second end of the first bridge arm, a second end of the second bridge arm, and a second end of the first battery cell are connected to a second end of the second battery cell, where the first bridge arm includes a first sub-bridge arm and a second sub-bridge arm, and the second bridge arm includes a third sub-bridge arm and a fourth sub-bridge arm; and the first end of the first battery cell and the first end of the second battery cell are positive electrodes, and the second end of the first battery cell and the second end of the second battery cell are negative electrodes; or the first end of the first battery cell and the first end of the second battery cell are negative electrodes, and the second end of the first battery cell and the second end of the second battery cell are positive electrodes.

In a possible implementation, a first end of the energy storage element is connected to the second end of the first bridge arm, and a second end of the energy storage element is connected to the second end of the second bridge arm.

In such an implementation, the control module is specifically configured to:
control the first sub-bridge arm and the fourth sub-bridge arm to be switched on at the same time, to form a circuit, which includes the first battery cell, the first sub-bridge arm, the energy storage element, and the fourth sub-bridge arm, for discharging from the first battery cell to the energy storage element; and control the first sub-bridge arm and the third sub-bridge arm to be switched on at the same time, to form a circuit, which includes the first battery cell, the first sub-bridge arm, the energy storage element, the third sub-bridge arm, and the second battery cell, for charging from the first battery cell and the energy storage element to the second battery cell; and/or
control the second sub-bridge arm and the third sub-bridge arm to be switched on at the same time, to form a circuit, which includes the second battery cell, the third sub-bridge arm, the energy storage element, and the second sub-bridge arm, for discharging from the second battery cell to the energy storage element; and control the first sub-bridge arm and the third sub-bridge arm to be switched on at the same time, to form a circuit, which includes the second battery cell, the third sub-bridge arm, the energy storage element, the first sub-bridge arm, and the first battery cell, for charging from the second battery cell and the energy storage element to the first battery cell.

In a possible implementation, a first end of the energy storage element is connected to the first end of the first bridge arm, and a second end of the energy storage element is connected to the first end of the second bridge arm.

In such an implementation, the control module is specifically configured to:
control the second sub-bridge arm and the third sub-bridge arm to be switched on at the same time, to form a circuit, which includes the first battery cell, the second sub-bridge arm, the energy storage element, and the third sub-bridge arm, for discharging from the first battery cell to the energy storage element; and control the second sub-bridge arm and the fourth sub-bridge arm to be switched on at the same time, to form a circuit, which includes the first battery cell, the second sub-bridge arm, the energy storage element, the fourth sub-bridge arm, and the second battery cell, for charging from the first battery cell and the energy storage element to the second battery cell; and/or
control the first sub-bridge arm and the fourth sub-bridge arm to be switched on at the same time, to form a circuit, which includes the second battery cell, the fourth sub-bridge arm, the energy storage element, and the first sub-bridge arm, for discharging from the second battery cell to the energy storage element; and control the second sub-bridge arm and the fourth sub-bridge arm to be switched on at the same time, to form a circuit, which includes the second battery cell, the fourth sub-bridge arm, the energy storage element, the second sub-bridge arm, and the first battery cell, for charging from the second battery cell and the energy storage element to the first battery cell.

In the foregoing embodiment, a reasonable control timing is designed to control the switching on and off of each of the sub-bridge arms, to form a circuit for discharging from the first battery cell to the energy storage element and a circuit for charging from the energy storage element and the first battery cell to the second battery cell, and/or to form a circuit for discharging from the second battery cell to the energy storage element and a circuit for charging from the energy storage element and the second battery cell to the first battery cell. The discharging circuit and the charging circuit are switched alternately, which enables repeated charging and discharging between the first battery cell and the second battery cell, thereby implementing the heating of the first battery cell and the second battery cell during charging and discharging.

In a possible implementation, the first sub-bridge arm includes a first switch transistor, the second sub-bridge arm includes a second switch transistor, the third sub-bridge arm includes a third switch transistor, and the fourth sub-bridge arm includes a fourth switch transistor. The control module implements the switching on and off of the first sub-bridge arm, the second sub-bridge arm, the third sub-bridge arm, and the fourth sub-bridge arm respectively by controlling the first switch transistor, the second switch transistor, the third switch transistor, and the fourth switch transistor.

In a possible implementation, a state switching switch is connected between the first end of the first battery cell and the first end of the second battery cell, or a state switching switch is connected between the second end of the first battery cell and the second end of the second battery cell. The control module is further configured to: control the state switching switch to be opened, so that the first battery cell is connected in series with the second battery cell.

In this embodiment, a state switching switch is further connected between the two battery cells, and the mode of connection between the first battery cell and the second battery cell may be switched using the state switching switch. If the first battery cell and the second battery cell are to be heated, the state switching switch may be controlled to be opened, so that the first battery cell is connected in series with the second battery cell. Additionally, in other situations, for example, if the first battery cell and the second battery cell will supply power to a power system, the state switching switch may be controlled to be closed, so that first battery cell is connected in parallel to the second battery cell.

In a possible implementation, the energy storage element includes an inductor; or the energy storage element includes an inductor and a first capacitor connected in series.

In a possible implementation, a second capacitor is connected in parallel to the first battery cell at the two ends, and a third capacitor is connected in parallel to the second battery cell at the two ends. The second capacitor and the third capacitor may implement functions such as voltage regulating, thereby improving the voltage stability of the traction battery.

**In** a possible implementation, the first battery cell and the second battery cell are further connected to a drive circuit of a motor, to provide power to the drive circuit.

**In** a second aspect, there is provided a control method for a battery heating device, which is connected to a traction battery and configured to heat the traction battery, where the battery heating device includes a first bridge arm, a second bridge arm, and an energy storage element, and the traction battery includes a first battery cell and a second battery cell. The control method includes:
controlling the first bridge arm and the second bridge arm, to form a circuit for discharging from the first battery cell to the energy storage element and a circuit for charging from the energy storage element and the first battery cell to the second battery cell, and/or to form a circuit for discharging from the second battery cell to the energy storage element and a circuit for charging from the energy storage element and the second battery cell to the first battery cell, for heating of the first battery cell and the second battery cell.

Two battery cells are heated at the same time. During charging and discharging, the two battery cells are connected in series. A reasonable control timing is designed to control the two bridge arms in the battery heating device, to form a circuit for discharging from one of the battery cells to the energy storage element and a circuit for charging from the energy storage element and the battery cell to the other battery cell. In this way, the two battery cells are heated at the same time during the charging and discharging, and a relatively high heating efficiency is thus achieved.

In a possible implementation, a first end of the first bridge arm is connected to a first end of the first battery cell, a first end of the second bridge arm is connected to a first end of the second battery cell, and a second end of the first bridge arm, a second end of the second bridge arm, and a second end of the first battery cell are connected to a second end of the second battery cell, where the first bridge arm includes a first sub-bridge arm and a second sub-bridge arm, and the second bridge arm includes a third sub-bridge arm and a fourth sub-bridge arm; and the first end of the first battery cell and the first end of the second battery cell are positive electrodes, and the second end of the first battery cell and the second end of the second battery cell are negative electrodes; or the first end of the first battery cell and the first end of the second battery cell are negative electrodes, and the second end of the first battery cell and the second end of the second battery cell are positive electrodes.

In a possible implementation, a first end of the energy storage element is connected to the second end of the first bridge arm, and a second end of the energy storage element is connected to the second end of the second bridge arm.

In such an implementation, the controlling the first bridge arm and the second bridge arm includes: receiving a heating request message; and generating a first control signal based on the heating request message, where the first control signal is used to:
control the first sub-bridge arm and the fourth sub-bridge arm to be switched on at the same time, to form a circuit, which includes the first battery cell, the first sub-bridge arm, the energy storage element, and the fourth sub-bridge arm, for discharging from the first battery cell to the energy storage element; and control the first sub-bridge arm and the third sub-bridge arm to be switched on at the same time, to form a circuit, which includes the first battery cell, the first sub-bridge arm, the energy storage element, the third sub-bridge arm, and the second battery cell, for charging from the first battery cell and the energy storage element to the second battery cell; and/or
control the second sub-bridge arm and the third sub-bridge arm to be switched on at the same time, to form a circuit, which includes the second battery cell, the third sub-bridge arm, the energy storage element, and the second sub-bridge arm, for discharging from the second battery cell to the energy storage element; and control the first sub-bridge arm and the third sub-bridge arm to be switched on at the same time, to form a circuit, which includes the second battery cell, the third sub-bridge arm, the energy storage element, the first sub-bridge arm, and the first battery cell, for charging from the second battery cell and the energy storage element to the first battery cell.

In a possible implementation, a first end of the energy storage element is connected to the first end of the first bridge arm, and a second end of the energy storage element is connected to the first end of the second bridge arm.

In such an implementation, the controlling the first bridge arm and the second bridge arm includes: receiving a heating request message; and generating a third control signal based on the heating request message, where the third control signal is used to:
control the second sub-bridge arm and the third sub-bridge arm to be switched on at the same time, to form a circuit, which includes the first battery cell, the second sub-bridge arm, the energy storage element, and the third sub-bridge arm, for discharging from the first battery cell to the energy storage element; and control the second sub-bridge arm and the fourth sub-bridge arm to be switched on at the same time, to form a circuit, which includes the first battery cell, the second sub-bridge arm, the energy storage element, the fourth sub-bridge arm, and the second battery cell, for charging from the first battery cell and the energy storage element to the second battery cell; and/or
control the first sub-bridge arm and the fourth sub-bridge arm to be switched on at the same time, to form a circuit, which includes the second battery cell, the fourth sub-bridge arm, the energy storage element, and the first sub-bridge arm, for discharging from the second battery cell to the energy storage element; and control the second sub-bridge arm and the fourth sub-bridge arm to be switched on at the same time, to form a circuit, which includes the second battery cell, the fourth sub-bridge arm, the energy storage element, the second sub-bridge arm, and the first battery cell, for charging from the second battery cell and the energy storage element to the first battery cell.

In the foregoing embodiment, a reasonable control timing is designed to control the switching on and off of each of the sub-bridge arms, to form a circuit for discharging from the first battery cell to the energy storage element and a circuit for charging from the energy storage element and the first battery cell to the second battery cell, and/or to form a circuit for discharging from the second battery cell to the energy storage element and a circuit for charging from the energy storage element and the second battery cell to the first battery cell. The discharging circuit and the charging circuit are switched alternately, which enables repeated charging and discharging between the first battery cell and the second battery cell, thereby implementing the heating of the first battery cell and the second battery cell during charging and discharging.

In a possible implementation, the control method further includes: receiving a heating stop message; and generating a second control signal based on the heating stop message, where the second control signal is used to control the battery heating device to stop heating the traction battery.

In a possible implementation, the first sub-bridge arm includes a first switch transistor, the second sub-bridge arm includes a second switch transistor, the third sub-bridge arm includes a third switch transistor, and the fourth sub-bridge arm includes a fourth switch transistor. The switching on and off of the first sub-bridge arm, the second sub-bridge arm, the third sub-bridge arm, and the fourth sub-bridge arm are respectively implemented by controlling the first switch transistor, the second switch transistor, the third switch transistor, and the fourth switch transistor.

In a possible implementation, a state switching switch is connected between the first end of the first battery cell and the first end of the second battery cell, or a state switching switch is connected between the second end of the first battery cell and the second end of the second battery cell. The control method further includes: controlling the state switching switch to be opened, so that the first battery cell is connected in series with the second battery cell.

In a possible implementation, the energy storage element includes an inductor; or the energy storage element includes an inductor and a first capacitor connected in series.

In a possible implementation, a second capacitor is connected in parallel to the first battery cell at the two ends, and a third capacitor is connected in parallel to the second battery cell at the two ends. The second capacitor and the third capacitor may implement functions such as voltage regulating, thereby improving the voltage stability of the traction battery.

In a possible implementation, the first battery cell and the second battery cell are further connected to a drive circuit of a motor, to provide power to the drive circuit.

In a third aspect, a control circuit for a battery heating device is provided. The control circuit includes a processor configured to perform the method in the second aspect or any of the possible implementations in the second aspect.

In a fourth aspect, a power device is provided. The power device includes: a traction battery including a first battery cell and a second battery cell; a battery heating device in the first aspect or any of the possible implementations in the first aspect, which is connected to the traction battery and configured to heat the traction battery; and a motor, where a drive circuit of the motor is connected to the traction battery, and the traction battery is configured to provide power to the drive circuit.

Based on the above technical solutions, the battery heating device may heat two battery cells at the same time. The battery heating device includes two bridge arms and an energy storage element. During charging and discharging, the two battery cells are connected in series. The two bridge arms are controlled to form a circuit for discharging from one of the battery cells to the energy storage element and a circuit for charging from the energy storage element and the battery cell to the other battery cell. In this way, the two battery cells are heated at the same time during the charging and discharging, and a relatively high heating efficiency is thus achieved.

### Brief Description of the Drawings

In order to illustrate the technical solutions of the embodiments of the present application more clearly, the drawings required in the description of the embodiments of the present application will be described briefly below. It will be apparent that the drawings described below are merely some embodiments of the present application, and for those of ordinary skill in the art, other drawings can also be obtained from these drawings without any creative efforts.
FIG. 1 is a schematic diagram of an application scenario of a battery heating device according to an embodiment of the present application;
FIG. 2 is a schematic block diagram of a battery heating device according to an embodiment of the present application;
FIG. 3 is a schematic diagram of a possible implementation based on the battery heating device shown in FIG. 2;
FIG. 4 is a schematic diagram of another possible implementation based on the battery heating device shown in FIG. 2;
FIG. 5 is a schematic diagram of another possible implementation based on the battery heating device shown in FIG. 2;
FIG. 6 is a schematic diagram of another possible implementation based on the battery heating device shown in FIG. 2;
FIG. 7 is a schematic flowchart of a control method for a battery heating device according to an embodiment of the present application;
FIG. 8 is a schematic block diagram of a control circuit for a battery heating device according to an embodiment of the present application; and
FIG. 9 is a schematic block diagram of a power device according to an embodiment of the present application.

### Detailed Description of Embodiments

The implementations of the present application will be further described in detail below in conjunction with the accompanying drawings and embodiments. The following detailed description of the embodiments and the accompanying drawings are used to illustrate the principle of the present application by way of example but should not be used to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are used for descriptive purposes only, and should not be construed as indicating or implying the relative importance. The term "perpendicular" does not mean being perpendicular in the strict sense, but within an allowable range of errors. The term "parallel" does not mean being parallel in the strict sense, but within an allowable range of errors.

The orientation terms in the following description all indicate directions shown in the drawings, but do not limit the specific structure in the present application. In the description of the present application, it should also be noted that the terms "disposing", "connecting", and "connection" should be interpreted in the broad sense unless explicitly defined and limited otherwise. For example, the terms may mean a fixed connection, a detachable connection, or an integral connection, or may mean a direct connection, or an indirect connection by means of an intermediate medium. For those of ordinary skill in the art, the specific meanings of the terms mentioned above in the present application can be construed according to specific circumstances.

With the development of times, new energy vehicles, due to their advantages of being environmentally friendly, low in noise and usage cost, etc. , have a great market prospect and can effectively facilitate energy saving and emission reduction, which is conducive to the development and progress of the society.

Due to electro-chemical properties of traction batteries, charge and discharge capabilities of a traction battery in a low temperature environment may be greatly limited, which seriously affects the experience of a customer when using a vehicle in winter. Therefore, it is required to heat the traction battery in the low temperature environment, in order to allow for normal use of the traction battery.

The traction battery in the embodiments of the present application may be a lithium-ion battery, a lithium metal battery, a lead-acid battery, a nickel-cadmium battery, a nickel-hydrogen battery, a lithium-sulfur battery, a lithium-air battery, a sodium-ion battery, or the like, which is not limited herein. In terms of scale, the traction battery in the embodiments of the present application may be a battery cell, or may be a battery module or a battery pack, which is not limited herein. In terms of application scenarios, the traction battery may be applied to power devices such as cars and ships. For example, it may be applied to an electric vehicle to supply power to the motor of the electric vehicle as a power source of the electric vehicle. The traction battery may further supply power to other power consuming apparatuses in the electric vehicle, such as an in-vehicle air-conditioner and a vehicle-mounted player.

For ease of description, the traction battery being applied to the new energy vehicle (i.e., an electric vehicle) is taken as an example to explain the solutions of the present application.

When the traction battery includes a plurality of battery cells, the following heating methods are usually employed in the prior art. The first method is to heat the battery cells in sequence, and the second method is to connect the plurality of battery cells in parallel and then heat same at the same time. However, the first method above prolongs the heating time, and the second method above leads to the current for heating being shunted. The two methods both result in a reduction in the heating efficiency and thus have an impact on the user experience.

For the reasons, the present application provides a dual-branch battery heating solution, in which two battery cells are connected in series by way of reasonable control, and are then heated at the same time, such that the efficiency of heating the battery cells is improved due to the current for heating being not shunted, .

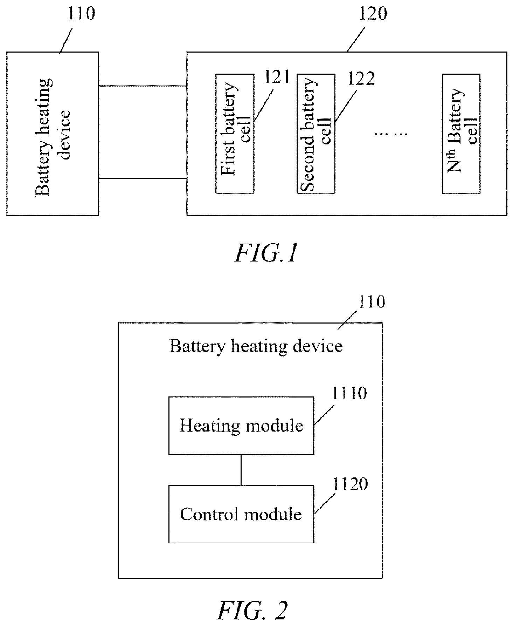

FIG. 1 is a schematic diagram of an application scenario of a battery heating device according to an embodiment of the present application. As shown in FIG. 1, the battery heating device 110 is connected to a traction battery 120. The battery heating device 110 is configured to heat the traction battery 120. The traction battery 120 includes N battery cells, such as a first battery cell, a second battery cell, ..., an N^{th} battery cell shown in FIG. 1, where N is a positive integer greater than or equal to 2. The battery heating device 110 according to the embodiments of the present application may, at a time, heat two of the battery cells at the same time. In other words, the N battery cells may be divided into a plurality of groups, two for each group, and the battery heating device 110 heats one of the groups of battery cells at a time. Neither the way in which the N battery cells are grouped, nor the sequence in which the groups of battery cells are heated is limited in the embodiments of the present application. With a first battery cell and a second battery cell as an example, the way in which the battery heating device 110 heats the first battery cell and the second battery cell at the same time is described below.

In addition, the traction battery 120 may further be connected to a power system, the power system including a motor, etc. The traction battery 120 may be connected to a drive circuit of the motor to provide power to the drive circuit of the motor, thereby allowing for an electric vehicle equipped with the traction battery 120 to travel.

In an implementation, a battery management system (BMS) for the traction battery 120 collects state information of the traction battery 120, such as a battery temperature, a state of charge (SOC), a voltage signal and a current signal, and determines whether the traction battery 120 needs to be heated based on the state information. If it is determined that the traction battery 120 needs to be heated, the BMS may send a heating request to a vehicle control unit (VCU). The VCU determines, based on the heating request sent by the BMS, whether to turn the battery heating device 110 on to heat the traction battery 120.

For example, after receiving the heating request sent by the BMS, the VCU may determine, based on the SOC of the traction battery 120, whether to heat the traction battery 120 using the battery heating device 110. If the traction battery 120 is fully charged, i.e., has a high SOC, which is, for example, higher than a threshold, the traction battery 120 may be heated using the battery heating device 110.

For another example, if the traction battery 120 has insufficient power, i.e., has a low SOC, which is, for example, lower than a threshold, the traction battery may not be heated using the battery heating device 110, in order to reduce the loss during battery heating. A motor controller, e.g., a microprogrammed control unit (MCU), may determine the state of the motor based on voltage, current and other information of the motor, and then send the state of the motor to the VCU. Therefore, if the motor is in a normal operating state at this time, the temperature of the traction battery 120 may be increased or maintained using heat generated by the operating loss of the motor. For example, the heat generated by the operating loss of the motor during vehicle traveling is used to heat coolant of the traction battery 120, which coolant is then used to increase or maintain the temperature of the traction battery 120.

Alternatively, when the SOC of the traction battery 120 is low, the battery heating device 110 may also be turned on to heat the traction battery 120, but the duration of a heating period of the battery heating device 110 is adjusted or the heating frequency of the battery heating device 110 is adjusted.

The usage scenario of the battery heating device 110 is not limited in the present application. The battery heating device 110 according to the embodiments of the present application may be used to heat the traction battery 120 as needed.

When heating of the traction battery 120 with the battery heating device 110, the BMS for the traction battery 120 may also monitor whether there is an anomaly in the temperature of the traction battery 120. If there is an anomaly in the temperature of the traction battery 120, the BMS may send information about the temperature anomaly to the VCU, and then the VCU controls the battery heating device 110 to stop heating the traction battery 120. In this case, the temperature of the traction battery 120 may be increased or maintained using heat generated by the operating loss of the motor. For example, the heat generated by the operating loss of the motor is used to heat coolant of the traction battery 120, which coolant is then used to increase or maintain the temperature of the traction battery 120.

When heating of the traction battery 120 with the battery heating device 110, if the temperature of the traction battery 120 meets requirements, the VCU may control the battery heating device 110 to stop heating the traction battery 120. In this case, the temperature of the traction battery 120 may be maintained using heat generated by the operating loss of the motor. For example, the heat generated by the operating loss of the motor is used to heat coolant of the traction battery 120, which coolant is then used to maintain the temperature of the traction battery 120.

The solution in which the battery heating device 110 according to the embodiments of the present application is used to heat the traction battery 120 is described below with reference to FIGS. 2 to 4.

FIG. 2 is a schematic block diagram of a battery heating device 110 according to an embodiment of the present application. As shown in FIG. 2, the battery heating device 110 includes a heating module 1110 and a control module 1120. The traction battery 120 includes the first battery cell 121 and the second battery cell 122. The battery heating device 110 may heat the first battery cell 121 and the second battery cell 122 at the same time.

The heating module 1110 includes a first bridge arm 1111, a second bridge arm 1112, and an energy storage element 1113. The energy storage element 1113 may be, for example, an inductor L, or may be an inductor L and a first capacitor connected in series.

A second capacitor C1 may further be, for example, connected in parallel to the first battery cell 121 at both ends, and a third capacitor C2 may further be, for example, connected in parallel to the second battery cell 122 at both ends. The second capacitor C1 and the third capacitor C2 may implement functions such as voltage regulating, thereby reducing voltage fluctuations of the first battery cell 121 and the second battery cell 122, and improving the voltage stability of the first battery cell 121 and the second battery cell 122. In this way, during vehicle driving, requirements of the motor controller for the sampling precision of battery voltages may be lowered.

The control module 1120 is configured to: control the first bridge arm 1111 and the second bridge arm 1112, to form a circuit for discharging from the first battery cell 121 to the energy storage element 1113 and a circuit for charging from the energy storage element 1113 and the first battery cell 121 to the second battery cell 122, for heating of the first battery cell 121 and the second battery cell 122 during charging and discharging; an/or control the first bridge arm 1111 and the second bridge arm 1112, to form a circuit for discharging from the second battery cell 122 to the energy storage element 1113 and a circuit for charging from the energy storage element 1113 and the second battery cell 122 to the first battery cell 121, for heating of the first battery cell 121 and the second battery cell 122 during charging and discharging.

The control module 1120 may be the VCU, or may be a control module relatively independent of the VCU, such as a control module specially provided for the battery heating device 110, which is not limited in the embodiments of the present application.

It can be seen that when the battery heating device 110 heats the first battery cell 121 and the second battery cell 122, the control module 1120 needs to control the first bridge arm 1111 and the second bridge arm 1112 of the heating module 1110 in such a way that the first bridge arm 1111 and the second bridge arm 1112 are switched on or off, to form a circuit for discharging from one of the first battery cell 121 and the second battery cell 122 to the energy storage element and a circuit for charging from the battery cell and the energy storage element to the other battery cell. The discharging circuit and the charging circuit are switched alternately, which may result in an increase in the temperature of the battery cells due to the flow of currents in both battery cells during charging and discharging, thereby implementing the heating of the two battery cells at the same time with a relatively high heating efficiency.

In an implementation, a first end E11 of the first bridge arm 1111 is connected to a first end of the first battery cell 121, a first end E21 of the second bridge arm 1112 is connected to a first end of the second battery cell 122, and a second end E12 of the first bridge arm 1111, a second end E22 of the second bridge arm 1112, and a second end of the first battery cell 121 are connected to a second end of the second battery cell 122. The first bridge arm 1111 includes a first sub-bridge arm 1101 and a second sub-bridge arm 1102, and the second bridge arm 1112 includes a third sub-bridge arm 1103 and a fourth sub-bridge arm 1104.

The first end of the first battery cell 121 is a positive electrode of the first battery cell 121, and the second end of the first battery cell 121 is a negative electrode of the first battery cell 121; and the first end of the second battery cell 122 is a positive electrode of the second battery cell 122, and the second end of the second battery cell 122 is a negative electrode of the second battery cell 122.

Alternatively, the first end of the first battery cell 121 is a negative electrode of the first battery cell 121, and the second end of the first battery cell 121 is a positive electrode of the first battery cell 121; and the first end of the second battery cell 122 is a negative electrode of the second battery cell 122, and the second end of the second battery cell 122 is a positive electrode of the second battery cell 122.

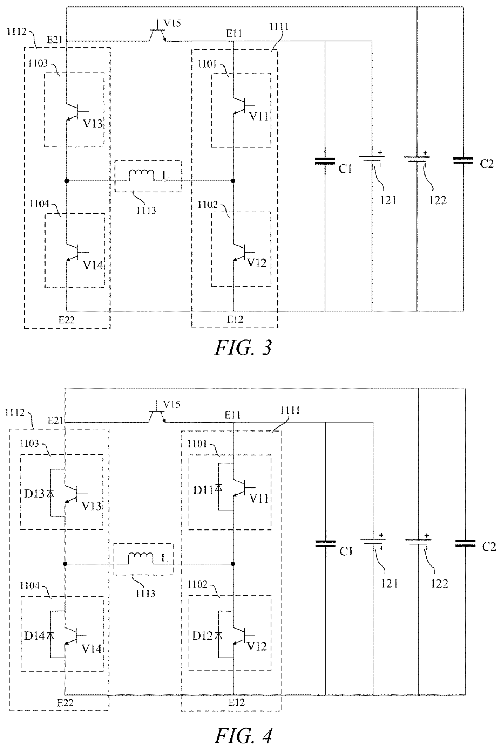

Further, a state switching switch is connected between the first end E11 of the first battery cell 121 and the first end E21 of the second battery cell 122, or a state switching switch is connected between the second end E12 of the first battery cell 121 and the second end E22 of the second battery cell 122. The state switching switch is, for example, a switch transistor V15 shown in FIGS. 3 to 6. The control module 1120 is further configured to control the state switching switch to be opened, so that the first battery cell 121 is connected in series with the second battery cell 122.

The mode of connection between the first battery cell 121 and the second battery cell 122 may be switched using the state switching switch. Therefore, if the first battery cell and the second battery cell need to be heated, the state switching switch may be controlled to be opened, so that the first battery cell 121 is connected in series with the second battery cell 122. Additionally, in other situations, for example, if the first battery cell 121 and the second battery cell 122 will supply power to a power system, etc., the state switching switch may be controlled to be closed, so that the first battery cell is connected in parallel to the second battery cell.

Here, the expression "connected in series" may mean that the positive electrode of the first battery cell 121 is connected to the positive electrode of the second battery cell 122, and the negative electrode of the first battery cell 121 is connected to the negative electrode of the second battery cell 122. In this way, currents may flow between the first battery cell 121 and the second battery cell 122, and energy may be exchanged between the first battery cell 121 and the second battery cell 122.

In an unclaimed arrangement, the energy storage element 1113 may be connected between the first bridge arm 1111 and the second bridge arm 1112. For example, as shown in FIGS. 3 and 4, one end of the energy storage element 1113 is connected between the first sub-bridge arm 1101 and the second sub-bridge arm 1102, and the other end of the energy storage element 1113 is connected between the third sub-bridge arm 1103 and the fourth sub-bridge arm 1104.

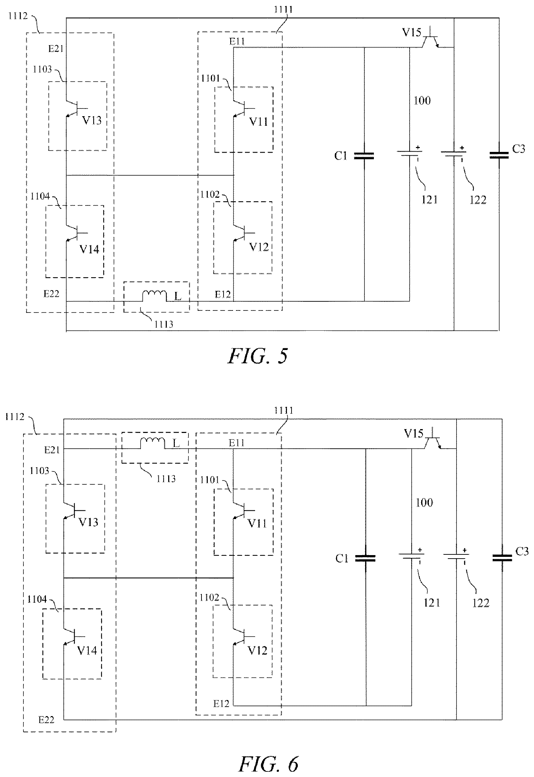

For another example, as shown in FIG. 5, one end of the energy storage element 1113 is connected to the second end E12 of the first bridge arm 1111, and the other end of the energy storage element 1113 is connected to the second end E22 of the second bridge arm 1112.

For another example, as shown in FIG. 6, one end of the energy storage element 1113 is connected to the first end E11 of the first bridge arm 1111, and the other end of the energy storage element 1113 is connected to the first end E21 of the second bridge arm 1112.

In an implementation, for the heating module 1110 shown in FIGS. 3 to 5, when the first battery cell 121 and the second battery cell 122 connected in series are to be heated, the control module 1120 may: control the first sub-bridge arm 1101 and the fourth sub-bridge arm 1104 to be switched on at the same time, to form a circuit, which includes the first battery cell 121, the first sub-bridge arm 1101, the energy storage element 1113, and the fourth sub-bridge arm 1104, for discharging from the first battery cell 121 to the energy storage element 1113; and control the first sub-bridge arm 1101 and the third sub-bridge arm 1103 to be switched on at the same time, to form a circuit, which includes the first battery cell 121, the first sub-bridge arm 1101, the energy storage element 1113, the third sub-bridge arm 1103, and the second battery cell 122, for charging from the first battery cell 121 and the energy storage element 1113 to the second battery cell 122.

Alternatively, for the heating module 1110 shown in FIGS. 3 to 5, when the first battery cell 121 and the second battery cell 122 connected in series are to be heated, the control module 1120 may also: control the second sub-bridge arm 1102 and the third sub-bridge arm 1103 to be switched on at the same time, to form a circuit, which includes the second battery cell 122, the third sub-bridge arm 1103, the energy storage element 1113, and the second sub-bridge arm 1102, for discharging from the second battery cell 122 to the energy storage element 1113; and control the first sub-bridge arm 1101 and the third sub-bridge arm 1103 to be switched on at the same time, to form a circuit, which includes the second battery cell 122, the third sub-bridge arm 1103, the energy storage element 1113, the first sub-bridge arm 1101, and the first battery cell 121, for charging from the second battery cell 122 and the energy storage element 1113 to the first battery cell 121.

For example, the process of battery heating is described below in detail with reference to FIGS. 3 to 5 by taking the first end of the first battery cell 121 as the positive electrode of the first battery cell 121, the second end of the first battery cell 121 as the negative electrode of the first battery cell 121, the first end of the second battery cell 122 as the positive electrode of the second battery cell 122, the second end of the second battery cell 122 as the negative electrode of the second battery cell 122, and the energy storage element 1113 as the inductor L.

In an implementation, for the heating module 1110 shown in FIGS. 3 to 5, the first sub-bridge arm 1101 includes a first switch transistor V11, the second sub-bridge arm 1102 includes a second switch transistor V12, the third sub-bridge arm 1103 includes a third switch transistor V13, and the fourth sub-bridge arm 1104 includes a fourth switch transistor V14. The control module 1120 implements the switching on of the first sub-bridge arm 1101, the second sub-bridge arm 1102, the third sub-bridge arm 1103, and the fourth sub-bridge arm 1104 respectively by controlling the first switch transistor V11, the second switch transistor V12, the third switch transistor V13, and the fourth switch transistor V14.

Specifically, in an implementation, for the heating module 1110 shown in FIGS. 3 to 5, each heating period may include a first stage and a second stage. In the first stage, the first switch transistor V11 and the fourth switch transistor V14 are closed, and the second switch transistor V12 and the third switch transistor V13 are opened, to form a circuit including the first battery cell 121, the first switch transistor V11, the inductor L, and the fourth switch transistor V14, where the circuit is used for discharging of the first battery cell 121 and energy storage of the inductor L, and the path of discharge from the first battery cell 121 to the inductor L is: from the positive electrode of the first battery cell 121 to V11, to L, to V14, and to the negative electrode of the first battery cell 121. In the second stage, the first switch transistor V11 and the third switch transistor V13 are closed, and the second switch transistor V12 and the fourth switch transistor V14 are opened, to form a circuit including the first battery cell 121, the first switch transistor V11, the inductor L, the third switch transistor V13, and the second battery cell 122, where the circuit is used for charging from the first battery cell 121 and the inductor L to the second battery cell 122, and the path of charge is: from the positive electrode of the first battery cell 121 to V11, to L, to V13, to the positive electrode of the second battery cell 122, to the negative electrode of the second battery cell 122, and to the negative electrode of the first battery cell 121. In addition, in order to keep this state unchanged, the third switch transistor V13 and the fourth switch transistor V14 may be controlled to be switched repeatedly, to control a charging time of the second battery cell 122.

Further, in addition to the first stage and the second stage, each heating period may include a third stage and a fourth stage. In the third stage, the second switch transistor V12 and the third switch transistor V13 are closed, and the first switch transistor V11 and the fourth switch transistor V14 are opened, to form a circuit including the second battery cell 122, the third switch transistor V13, the inductor L, and the second switch transistor V12, where the circuit is used for discharging of the second battery cell 122 and energy storage of the inductor L, and the path of discharge from the second battery cell 122 to the inductor L is: from the positive electrode of the second battery cell 122 to V13, to L, to V12, and to the negative electrode of the second battery cell 122. In the fourth stage, the first switch transistor V11 and the third switch transistor V13 are closed, and the second switch transistor V12 and the fourth switch transistor V14 are opened, to form a circuit including the second battery cell 122, the third switch transistor V13, the inductor L, the first switch transistor V11, and the first battery cell 121, where the circuit is used for charging from the second battery cell 122 and the inductor L to the first battery cell 121, and the path of charge is: from the positive electrode of the second battery cell 122 to V13, to L, to V11, to the positive electrode of the first battery cell 121, to the negative electrode of the first battery cell 121, and to the negative electrode of the second battery cell 122. In addition, in order to keep this state unchanged, the first switch transistor V11 and the second switch transistor V12 may be controlled to be switched repeatedly, to control a charging time of the first battery cell 121.

Similarly, in another implementation, for the heating module 1110 shown in FIGS. 3, 4 and 6, when the first battery cell 121 and the second battery cell 122 connected in series are to be heated, the control module 1120 may: control, in the first stage, the second sub-bridge arm 1102 and the third sub-bridge arm 1103 to be switched on at the same time, to form a circuit, which includes the first battery cell 121, the second sub-bridge arm 1102, the energy storage element 1113, and the third sub-bridge arm 1103, for discharging from the first battery cell 121 to the energy storage element 1113; and control, in the second stage, the second sub-bridge arm 1102 and the fourth sub-bridge arm 1104 to be switched on at the same time, to form a circuit, which includes the first battery cell 121, the second sub-bridge arm 1102, the energy storage element 1113, the fourth sub-bridge arm 1104, and the second battery cell 122, for charging from the first battery cell 121 and the energy storage element 1113 to the second battery cell 122; and the control module 1120 may also: control, in the third stage, the first sub-bridge arm 1101 and the fourth sub-bridge arm 1104 to be switched on at the same time, to form a circuit, which includes the second battery cell 122, the fourth sub-bridge arm 1104, the energy storage element 1113, and the first sub-bridge arm 1101, for discharging from the second battery cell 122 to the energy storage element 1113; and control, in the fourth stage, the second sub-bridge arm 1102 and the fourth sub-bridge arm 1104 to be switched on at the same time, to form a circuit, which includes the second battery cell 122, the fourth sub-bridge arm 1104, the energy storage element 1113, the second sub-bridge arm 1102, and the first battery cell 121, for charging from the second battery cell 122 and the energy storage element 1113 to the first battery cell 121. The control module 1120 may implement the switching on and off of each sub-bridge arm by controlling the corresponding switch transistor of each sub-bridge arm.

It can be seen that for the specific circuit structure of the heating module 1110, a reasonable control timing is designed to control the switching on and off of each sub-bridge arm in the heating module 1110 shown in FIGS. 3 to 6, to form a circuit for discharging from one of the battery cells to the energy storage element 1113 and a circuit for charging from the energy storage element 1113 and the battery cell to the other battery cell. The discharging circuit and the charging circuit are switched alternately, such that the two battery cells are heated at the same time during the charging and discharging, and a relatively high heating efficiency is thus achieved.

It should be understood that the heating module 1110 shown in FIG. 3 is merely an example, and each sub-bridge arm may also be implemented in other manners. For example, in a more preferred implementation shown in FIG. 4, the first sub-bridge arm 1101 may include the first switch transistor V11, and a first free-wheeling diode D11 connected in parallel to the first switch transistor V11; the second sub-bridge arm 1102 may include the second switch transistor V12, and a second free-wheeling diode D12 connected in parallel to the second switch transistor V12; the third sub-bridge arm 1103 may include the third switch transistor V13, and a third free-wheeling diode D13 connected in parallel to the third switch transistor V13; and the fourth sub-bridge arm 1104 may include the fourth switch transistor V14, and a fourth free-wheeling diode D14 connected in parallel to the fourth switch transistor V14.

Free-wheeling diodes are usually used along with an inductor. When the current of the inductor suddenly changes, the voltage across the inductor may suffer from an abrupt change, which may cause damage to other elements in the circuit. However, when the inductor is used along with a free-wheeling diode, the current of the inductor may change gently, which prevents an abrupt change in the voltage of the inductor, thereby improving the safety of the circuit.

By way of example, as shown in FIG. 4, when the heating period moves from the first stage to the second stage, i.e., when the third switch transistor V13 and the fourth switch transistor V14 are switched, the current may briefly persist in the path of discharge from the first battery cell 121 to the inductor L in the first stage due to a switching delay. In this case, the fourth free-wheeling diode D14 may buffer the current to prevent the abrupt change in the voltage, thereby improving the safety of the circuit.

It should be understood that in some cases, the first switch transistor V11 and the first free-wheeling diode connected in parallel thereto, the second switch transistor V12 and the second free-wheeling diode D12 connected in parallel thereto, the third switch transistor V13 and the third free-wheeling diode connected in parallel thereto, and the fourth switch transistor V14 and the fourth free-wheeling diode D14 connected in parallel thereto may each be referred to as an insulated gate bipolar transistor (IGBT).

Similarly, for the heating module 1110 shown in FIGS. 5 and 6, each sub-bridge arm may also include a switch transistor and a free-wheeling diode connected in parallel to the switch transistor, which is not further shown in the present application.

The specific form of each sub-bridge arm is not limited in the embodiments of the present application. When each sub-bridge arm does not include the corresponding free-wheeling diode, the function of the heating module 1110 may still be implemented.

The term "connected" or "connection" in the embodiments of the present application may be a direct connection, or an indirect connection via other elements, which is not limited in the present application.

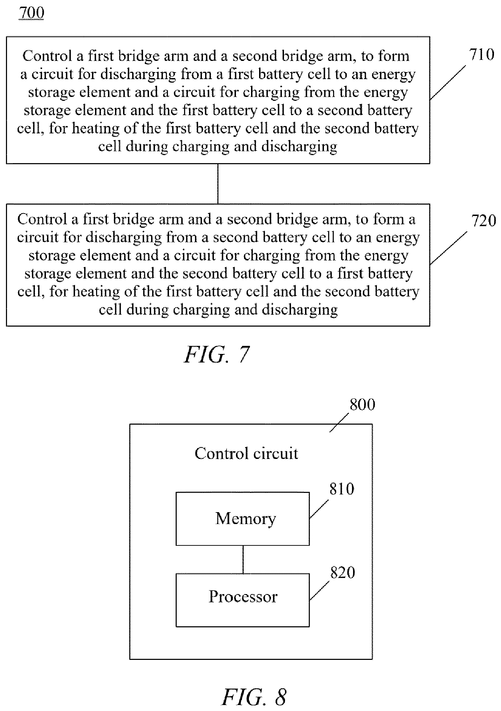

The embodiments of the present application further provide a control method for a battery heating device. Here, for the structure of the battery heating device, reference may be made to the specific description for FIGS. 1 to 6, and details will not be repeated herein. As shown in FIG. 7, the control method 700 for a battery heating device includes either or both of the following steps:
in step 710, controlling the first bridge arm and the second bridge arm, to form a circuit for discharging from the first battery cell to the energy storage element and a circuit for charging from the energy storage element and the first battery cell to the second battery cell, for heating of the first battery cell and the second battery cell; and/or
in step 720, controlling the first bridge arm and the second bridge arm, to form a circuit for discharging from the second battery cell to the energy storage element and a circuit for charging from the energy storage element and the second battery cell to the first battery cell, for heating of the first battery cell and the second battery cell.

Based on the above technical solutions, two battery cells may be heated at the same time. During charging and discharging, the two battery cells are connected in series. A reasonable control timing is designed to control the two bridge arms in the battery heating device, to form a circuit for discharging from one of the battery cells to the energy storage element and a circuit for charging from the energy storage element and the battery cell to the other battery cell. In this way, the two battery cells are heated at the same time during the charging and discharging, and a relatively high heating efficiency is thus achieved.

In an implementation, a first end of the first bridge arm is connected to a first end of the first battery cell, a first end of the second bridge arm is connected to a first end of the second battery cell, and a second end of the first bridge arm, a second end of the second bridge arm, and a second end of the first battery cell are connected to a second end of the second battery cell, where the first bridge arm includes a first sub-bridge arm and a second sub-bridge arm, and the second bridge arm includes a third sub-bridge arm and a fourth sub-bridge arm; and the first end of the first battery cell and the first end of the second battery cell are positive electrodes, and the second end of the first battery cell and the second end of the second battery cell are negative electrodes; or the first end of the first battery cell and the first end of the second battery cell are negative electrodes, and the second end of the first battery cell and the second end of the second battery cell are positive electrodes.

In an unclaimed implementation, a first end of the energy storage element is connected between the first sub-bridge arm and the second sub-bridge arm, and a second end of the energy storage element is connected between the third sub-bridge arm and the fourth sub-bridge arm. In a possible implementation, a first end of the energy storage element is connected to the second end of the first bridge arm, and a second end of the energy storage element is connected to the second end of the second bridge arm.

In a possible implementation, in step 710, the controlling the first bridge arm and the second bridge arm includes: receiving a heating request message; and generating a first control signal based on the heating request message, where the first control signal is used to: control the first sub-bridge arm and the fourth sub-bridge arm to be switched on at the same time, to form a circuit, which includes the first battery cell, the first sub-bridge arm, the energy storage element, and the fourth sub-bridge arm, for discharging from the first battery cell to the energy storage element; and control the first sub-bridge arm and the third sub-bridge arm to be switched on at the same time, to form a circuit, which includes the first battery cell, the first sub-bridge arm, the energy storage element, the third sub-bridge arm, and the second battery cell, for charging from the first battery cell and the energy storage element to the second battery cell.

In a possible implementation, in step 720, the controlling the first bridge arm and the second bridge arm includes: receiving a heating request message; and generating a first control signal based on the heating request message, where the first control signal is used to: control the second sub-bridge arm and the third sub-bridge arm to be switched on at the same time, to form a circuit, which includes the second battery cell, the third sub-bridge arm, the energy storage element, and the second sub-bridge arm, for discharging from the second battery cell to the energy storage element; and control the first sub-bridge arm and the third sub-bridge arm to be switched on at the same time, to form a circuit, which includes the second battery cell, the third sub-bridge arm, the energy storage element, the first sub-bridge arm, and the first battery cell, for charging from the second battery cell and the energy storage element to the first battery cell.

In an unclaimed implementation, a first end of the energy storage element is connected between the first sub-bridge arm and the second sub-bridge arm, and a second end of the energy storage element is connected between the third sub-bridge arm and the fourth sub-bridge arm. In a possible implementation, a first end of the energy storage element is connected to the first end of the first bridge arm, and a second end of the energy storage element is connected to the first end of the second bridge arm.

In a possible implementation, in step 710, the controlling the first bridge arm and the second bridge arm includes: receiving a heating request message; and generating a third control signal based on the heating request message, where the third control signal is used to: control the second sub-bridge arm and the third sub-bridge arm to be switched on at the same time, to form a circuit, which includes the first battery cell, the second sub-bridge arm, the energy storage element, and the third sub-bridge arm, for discharging from the first battery cell to the energy storage element; and control the second sub-bridge arm and the fourth sub-bridge arm to be switched on at the same time, to form a circuit, which includes the first battery cell, the second sub-bridge arm, the energy storage element, the fourth sub-bridge arm, and the second battery cell, for charging from the first battery cell and the energy storage element to the second battery cell.

In a possible implementation, in step 720, the controlling the first bridge arm and the second bridge arm includes: receiving a heating request message; and generating a third control signal based on the heating request message, where the third control signal is used to: control the first sub-bridge arm and the fourth sub-bridge arm to be switched on at the same time, to form a circuit, which includes the second battery cell, the fourth sub-bridge arm, the energy storage element, and the first sub-bridge arm, for discharging from the second battery cell to the energy storage element; and control the second sub-bridge arm and the fourth sub-bridge arm to be switched on at the same time, to form a circuit, which includes the second battery cell, the fourth sub-bridge arm, the energy storage element, the second sub-bridge arm, and the first battery cell, for charging from the second battery cell and the energy storage element to the first battery cell.

In a possible implementation, the control method further includes: receiving a heating stop message; and generating a second control signal based on the heating stop message, where the second control signal is used to control the battery heating device to stop heating the traction battery.

In an implementation, the first sub-bridge arm includes a first switch transistor, the second sub-bridge arm includes a second switch transistor, the third sub-bridge arm includes a third switch transistor, and the fourth sub-bridge arm includes a fourth switch transistor. The switching on and off of the first sub-bridge arm, the second sub-bridge arm, the third sub-bridge arm, and the fourth sub-bridge arm are respectively implemented by controlling the first switch transistor, the second switch transistor, the third switch transistor, and the fourth switch transistor.

In an implementation, a state switching switch is connected between the first end of the first battery cell and the first end of the second battery cell, or a state switching switch is connected between the second end of the first battery cell and the second end of the second battery cell. The control method further includes: controlling the state switching switch to be opened, so that the first battery cell is connected in series with the second battery cell.

In an implementation, the energy storage element includes an inductor; or the energy storage element includes an inductor and a first capacitor connected in series.

In an implementation, a second capacitor is connected in parallel to the first battery cell at the two ends, and a third capacitor is connected in parallel to the second battery cell at the two ends.

In an implementation, the first battery cell and the second battery cell are further connected to a drive circuit of a motor, to provide power to the drive circuit.

It should be understood that, for specific control of each bridge arm and the resulting benefit effects in the method embodiments, reference may be made to the corresponding description in the device embodiments, and details will not be repeated herein for the sake of brevity.

FIG. 8 is a schematic block diagram of a control circuit 800 for a battery heating device according to an embodiment of the present application. As shown in FIG. 8, the control circuit 800 includes a processor 820. Optionally, the control circuit 800 further includes a memory 810. The memory 810 is configured to store instructions. The processor 820 is configured to read the instructions, and perform, according to the instructions, the methods in the foregoing embodiments of the present application.

The processor 820 may, for example, correspond to the control module of any of the battery heating devices described above.

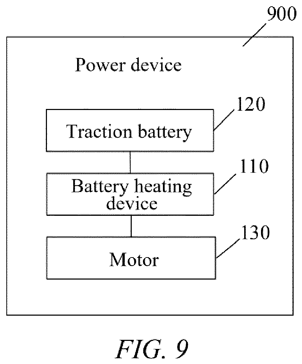

FIG. 9 is a schematic block diagram of a power device 900 according to an embodiment of the present application. The power device 900 includes: a traction battery 120; a battery heating device 110 in any of the embodiments described above, where the battery heating device 110 is connected to the traction battery 120 and configured to heat the traction battery 120; and a motor 130, where a drive circuit 131 of the motor 130 is connected to the traction battery 120, and the traction battery 120 is configured to provide power to the drive circuit 131.

The power device 900 may be, for example, an electric vehicle.

An embodiment of the present application further provides a readable storage medium for storing a computer program, where the computer program is used to execute the methods in the foregoing embodiments of the present application.

Those of ordinary skill in the art would have realized that the units and algorithm steps of various examples described with reference to the embodiments disclosed herein may be implemented in electronic hardware, or a combination of computer software and electronic hardware. Whether these functions are performed in hardware or software depends on the specific application and design constraints of the technical solution. Persons skilled in the art may implement the described functions by using different methods for each particular application, but such implementation should not be considered beyond the scope of the present application, as defined in the appended claims.

A person skilled in the art would clearly understand that for convenience and brevity of the description, for the specific operating process of the systems, devices and units described above, reference may be made to the corresponding process in the foregoing method embodiments, and details will not be described herein again.

In several embodiments provided in the present application, it should be understood that the disclosed systems, devices and methods may be implemented in other manners. For example, the device embodiments described above are merely illustrative. For example, the division of the units is merely division of logical functions, and there may be additional division manners during actual implementation. For example, a plurality of units or components may be combined or integrated into another system, or some features may be omitted or not executed. Additionally, the displayed or discussed mutual couplings or direct couplings or communication connections may be implemented by some interfaces. The indirect couplings or communication connections between devices or units may be implemented in electrical, mechanical or other forms.

The units illustrated as separate components may be or may not be physically separate, and the components shown as units may be or may not be physical units, which may be located at one place, or may be distributed on a plurality of network units. The object of the solutions of the embodiments can be achieved by selecting some or all of the units according to actual requirements.

## Claims

1. A system comprising a battery heating device (110) and a traction battery, wherein the battery heating device (110) is connected to a traction battery (120) and configured to heat the traction battery (120), and wherein the traction battery (120) comprises a first battery cell (121) and a second battery cell (122), the battery heating device (110) comprising:
a heating module (1110) comprising a first bridge arm (1111), a second bridge arm (1112), and an energy storage element (1113); and
a control module (1120) configured to control the first bridge arm (1111) and the second bridge arm (1112), to form a circuit for discharging from the first battery cell (121) to the energy storage element (1113) and a circuit for charging from the energy storage element (1113) and the first battery cell (121) to the second battery cell (122), and/or to form a circuit for discharging from the second battery cell (122) to the energy storage element (1113) and a circuit for charging from the energy storage element (1113) and the second battery cell (122) to the first battery cell (121), for heating of the first battery cell (121) and the second battery cell (122),
wherein the control module is configured to switch between the circuit for discharging and the circuit for charging alternately, wherein
a first end of the first bridge arm (1111) is connected to a first end of the first battery cell (121), a first end of the second bridge arm (1112) is connected to a first end of the second battery cell (122), and a second end of the first bridge arm (1111), a second end of the second bridge arm (1112), and a second end of the first battery cell (121) are connected to a second end of the second battery cell (122), wherein the first bridge arm (1111) comprises a first sub-bridge arm (1101) and a second sub-bridge arm (1102), and the second bridge arm (1112) comprises a third sub-bridge arm (1103) and a fourth sub-bridge arm (1104); and
the first end of the first battery cell (121) is a positive electrode of the first battery cell (121), the second end of the first battery cell (121) is a negative electrode of the first battery cell (121), the first end of the second battery cell (122) is a positive electrode of the second battery cell (122), and the second end of the second battery cell (122) is a negative electrode of the second battery cell (122); or the first end of the first battery cell (121) is a negative electrode of the first battery cell (121), the second end of the first battery cell (121) is a positive electrode of the first battery cell (121), the first end of the second battery cell (122) is a negative electrode of the second battery cell (122), and the second end of the second battery cell (122) is a positive electrode of the second battery cell (122);
a first end of the energy storage element (1113) is connected to the second end of the first bridge arm (1111), and a second end of the energy storage element (1113) is connected to the second end of the second bridge arm (1112), or a first end of the energy storage element (1113) is connected to the first end of the first bridge arm (1111), and a second end of the energy storage element (1113) is connected to the first end of the second bridge arm (1112);
wherein, when the first end of the energy storage element (1113) is connected to the second end of the first bridge arm (1111) and the second end of the energy storage element (1113) is connected to the second end of the second bridge arm (1112), the control module is specifically configured to:
control the first sub-bridge arm (1101) and the fourth sub-bridge arm (1104) to be switched on at the same time, to form a circuit, which comprises the first battery cell (121), the first sub-bridge arm (1101), the energy storage element (1113), and the fourth sub-bridge arm (1104), for discharging from the first battery cell (121) to the energy storage element (1113); and
control the first sub-bridge arm (1101) and the third sub-bridge arm (1103) to be switched on at the same time, to form a circuit, which comprises the first battery cell (121), the first sub-bridge arm (1101), the energy storage element (1113), the third sub-bridge arm (1103), and the second battery cell (122), for charging from the first battery cell (121) and the energy storage element (1113) to the second battery cell (122);
and/or
control the second sub-bridge arm (1102) and the third sub-bridge arm (1103) to be switched on at the same time, to form a circuit, which comprises the second battery cell (122), the third sub-bridge arm (1103), the energy storage element (1113), and the second sub-bridge arm (1102), for discharging from the second battery cell (122) to the energy storage element (1113); and
control the first sub-bridge arm (1101) and the third sub-bridge arm (1103) to be switched on at the same time, to form a circuit, which comprises the second battery cell (122), the third sub-bridge arm (1103), the energy storage element (1113), the first sub-bridge arm (1101), and the first battery cell (121), for charging from the second battery cell (122) and the energy storage element (1113) to the first battery cell (121); and
wherein, when the first end of the energy storage element (1113) is connected to the first end of the first bridge arm (1111) and the second end of the energy storage element (1113) is connected to the first end of the second bridge arm (1112), the control module is specifically configured to:
control the second sub-bridge arm (1102) and the third sub-bridge arm (1103) to be switched on at the same time, to form a circuit, which comprises the first battery cell (121), the second sub-bridge arm (1102), the energy storage element (1113), and the third sub-bridge arm (1103), for discharging from the first battery cell (121) to the energy storage element (1113); and
control the second sub-bridge arm (1102) and the fourth sub-bridge arm (1104) to be switched on at the same time, to form a circuit, which comprises the first battery cell (121), the second sub-bridge arm (1102), the energy storage element (1113), the fourth sub-bridge arm (1104), and the second battery cell (122), for charging from the first battery cell (121) and the energy storage element (1113) to the second battery cell (122);
and/or
control the first sub-bridge arm (1101) and the fourth sub-bridge arm (1104) to be switched on at the same time, to form a circuit, which comprises the second battery cell (122), the fourth sub-bridge arm (1104), the energy storage element (1113), and the first sub-bridge arm (1101), for discharging from the second battery cell (122) to the energy storage element (1113); and
control the second sub-bridge arm (1102) and the fourth sub-bridge arm (1104) to be switched on at the same time, to form a circuit, which comprises the second battery cell (122), the fourth sub-bridge arm (1104), the energy storage element (1113), the second sub-bridge arm (1102), and the first battery cell (121), for charging from the second battery cell (122) and the energy storage element (1113) to the first battery cell (121).

2. A system according to claim 1, wherein
the first sub-bridge arm (1101) comprises a first switch transistor (V11), the second sub-bridge arm (1102) comprises a second switch transistor (V12), the third sub-bridge arm (1103) comprises a third switch transistor (V13), and the fourth sub-bridge arm (1104) comprises a fourth switch transistor (V14),
wherein the switching on and off of the first sub-bridge arm (1101), the second sub-bridge arm (1102), the third sub-bridge arm (1103), and the fourth sub-bridge arm (1104) are respectively implemented by controlling the first switch transistor (V11), the second switch transistor (V12), the third switch transistor (V13), and the fourth switch transistor (V14).

3. The system according to any one of claims 1 to 2, wherein a state switching switch is connected between the first end of the first battery cell (121) and the first end of the second battery cell (122), or a state switching switch is connected between the second end of the first battery cell (121) and the second end of the second battery cell (122); and wherein the control method further comprises:
controlling the state switching switch to be opened, so that the first battery cell (121) is connected in series with the second battery cell (122).

4. The system according to any one of claims 1 to 3, wherein
the energy storage element (1113) comprises an inductor (L); or
the energy storage element (1113) comprises an inductor (L) and a first capacitor connected in series.

5. The system according to any one of claims 1 to 4, wherein a second capacitor is connected in parallel to the first battery cell (121) at the two ends, and a third capacitor is connected in parallel to the second battery cell (122) at the two ends.

6. A control method for a battery heating device (110), which is connected to a traction battery (120) and configured to heat the traction battery (120), wherein the battery heating device (110) comprises a first bridge arm (1111), a second bridge arm (1112), and an energy storage element (1113), and the traction battery (120) comprises a first battery cell (121) and a second battery cell (122), the control method comprising:
controlling the first bridge arm (1111) and the second bridge arm (1112), to form a circuit for discharging from the first battery cell (121) to the energy storage element (1113) and a circuit for charging from the energy storage element (1113) and the first battery cell (121) to the second battery cell (122), and/or to form a circuit for discharging from the second battery cell (122) to the energy storage element (1113) and a circuit for charging from the energy storage element (1113) and the second battery cell (122) to the first battery cell (121), for heating of the first battery cell (121) and the second battery cell (122) wherein the method comprises controlling the first bridge arm (1111) and the second bridge arm (1112) to switch between the circuit for discharging and the circuit for charging alternately, wherein:
a first end of the first bridge arm (1111) is connected to a first end of the first battery cell (121), a first end of the second bridge arm (1112) is connected to a first end of the second battery cell (122), and a second end of the first bridge arm (1111), a second end of the second bridge arm (1112), and a second end of the first battery cell (121) are connected to a second end of the second battery cell (122), wherein the first bridge arm (1111) comprises a first sub-bridge arm (1101) and a second sub-bridge arm (1102), and the second bridge arm (1112) comprises a third sub-bridge arm (1103) and a fourth sub-bridge arm (1104); and
the first end of the first battery cell (121) and the first end of the second battery cell (122) are positive electrodes, and the second end of the first battery cell (121) and the second end of the second battery cell (122) are negative electrodes; or the first end of the first battery cell (121) and the first end of the second battery cell (122) are negative electrodes, and the second end of the first battery cell (121) and the second end of the second battery cell (122) are positive electrodes;
wherein a first end of the energy storage element (1113) is connected to the second end of the first bridge arm (1111), and a second end of the energy storage element (1113) is connected to the second end of the second bridge arm (1112), or a first end of the energy storage element (1113) is connected to the first end of the first bridge arm (1111), and a second end of the energy storage element (1113) is connected to the first end of the second bridge arm (1112),
; and
wherein, when the first end of the energy storage element (1113) is connected to the second end of the first bridge arm (1111) and the second end of the energy storage element (1113) is connected to the second end of the second bridge arm (1112), the controlling the first bridge arm (1111) and the second bridge arm (1112) comprises:
receiving a heating request message; and
generating a first control signal based on the heating request message, wherein the first control signal is used to:
control the first sub-bridge arm (1101) and the fourth sub-bridge arm (1104) to be switched on at the same time, to form a circuit, which comprises the first battery cell (121), the first sub-bridge arm (1101), the energy storage element (1113), and the fourth sub-bridge arm (1104), for discharging from the first battery cell (121) to the energy storage element (1113); and
control the first sub-bridge arm (1101) and the third sub-bridge arm (1103) to be switched on at the same time, to form a circuit, which comprises the first battery cell (121), the first sub-bridge arm (1101), the energy storage element (1113), the third sub-bridge arm (1103), and the second battery cell (122), for charging from the first battery cell (121) and the energy storage element (1113) to the second battery cell (122);
and/or
control the second sub-bridge arm (1102) and the third sub-bridge arm (1103) to be switched on at the same time, to form a circuit, which comprises the second battery cell (122), the third sub-bridge arm (1103), the energy storage element (1113), and the second sub-bridge arm (1102), for discharging from the second battery cell (122) to the energy storage element (1113); and
control the first sub-bridge arm (1101) and the third sub-bridge arm (1103) to be switched on at the same time, to form a circuit, which comprises the second battery cell (122), the third sub-bridge arm (1103), the energy storage element (1113), the first sub-bridge arm (1101), and the first battery cell (121), for charging from the second battery cell (122) and the energy storage element (1113) to the first battery cell (121); and
wherein, when the first end of the energy storage element (1113) is connected to the first end of the first bridge arm (1111) and the second end of the energy storage element (1113) is connected to the first end of the second bridge arm (1112), the controlling the first bridge arm (1111) and the second bridge arm (1112) comprises:
receiving a heating request message; and
generating a third control signal based on the heating request message, wherein the third control signal is used to:
control the second sub-bridge arm (1102) and the third sub-bridge arm (1103) to be switched on at the same time, to form a circuit, which comprises the first battery cell (121), the second sub-bridge arm (1102), the energy storage element (1113), and the third sub-bridge arm (1103), for discharging from the first battery cell (121) to the energy storage element (1113); and
control the second sub-bridge arm (1102) and the fourth sub-bridge arm (1104) to be switched on at the same time, to form a circuit, which comprises the first battery cell (121), the second sub-bridge arm (1102), the energy storage element (1113), the fourth sub-bridge arm (1104), and the second battery cell (122), for charging from the first battery cell (121) and the energy storage element (1113) to the second battery cell (122);
and/or
control the first sub-bridge arm (1101) and the fourth sub-bridge arm (1104) to be switched on at the same time, to form a circuit, which comprises the second battery cell (122), the fourth sub-bridge arm (1104), the energy storage element (1113), and the first sub-bridge arm (1101), for discharging from the second battery cell (122) to the energy storage element (1113); and
control the second sub-bridge arm (1102) and the fourth sub-bridge arm (1104) to be switched on at the same time, to form a circuit, which comprises the second battery cell (122), the fourth sub-bridge arm (1104), the energy storage element (1113), the second sub-bridge arm (1102), and the first battery cell (121), for charging from the second battery cell (122) and the energy storage element (1113) to the first battery cell (121).

7. The control method according to claim 6, wherein the control method further comprises:
receiving a heating stop message; and
generating a second control signal based on the heating stop message, wherein the second control signal is used to control the battery heating device (110) to stop heating the traction battery (120).

8. The control method according to any one of claims 6 to 7, wherein
the first sub-bridge arm (1101) comprises a first switch transistor (V11), the second sub-bridge arm (1102) comprises a second switch transistor (V12), the third sub-bridge arm (1103) comprises a third switch transistor (V13), and the fourth sub-bridge arm (1104) comprises a fourth switch transistor (V14),
wherein the switching on and off of the first sub-bridge arm (1101), the second sub-bridge arm (1102), the third sub-bridge arm (1103), and the fourth sub-bridge arm (1104) are respectively implemented by controlling the first switch transistor (V11), the second switch transistor (V12), the third switch transistor (V13), and the fourth switch transistor (V14).

9. The control method according to any one of claims 6 to 8, wherein a state switching switch is connected between the first end of the first battery cell (121) and the first end of the second battery cell (122), or a state switching switch is connected between the second end of the first battery cell (121) and the second end of the second battery cell (122); and wherein the control method further comprises:
controlling the state switching switch to be opened, so that the first battery cell (121) is connected in series with the second battery cell (122).

10. The control method according to any one of claims 6 to 9, wherein
the energy storage element (1113) comprises an inductor (L); or
the energy storage element (1113) comprises an inductor (L) and a first capacitor connected in series.

11. The control method according to any one of claims 6 to 10, wherein a second capacitor is connected in parallel to the first battery cell (121) at the two ends, and a third capacitor is connected in parallel to the second battery cell (122) at the two ends.

12. The control method according to any one of claims 6 to 11, wherein the first battery cell (121) and the second battery cell (122) are further connected to a drive circuit (131) of a motor (130), to provide power to the drive circuit (131).

13. A power device, comprising:
a system according to any one of claims 1 to 5; and
a motor (130), wherein a drive circuit (131) of the motor (130) is connected to the traction battery (120), and the traction battery (120) is configured to provide power to the drive circuit (131).

## Patentansprüche

1. System, umfassend eine Batterieheizvorrichtung (110) und eine Traktionsbatterie, wobei die Batterieheizvorrichtung (110) mit einer Traktionsbatterie (120) verbunden und konfiguriert ist, um die Traktionsbatterie (120) zu beheizen, und wobei die Traktionsbatterie (120) eine erste Batteriezelle (121) und eine zweite Batteriezelle (122) umfasst, wobei die Batterieheizvorrichtung (110) Folgendes umfasst:
ein Heizmodul (1110), umfassend einen ersten Brückenarm (1111), einen zweiten Brückenarm (1112) und ein Energiespeicherelement (1113); und
ein Steuermodul (1120), das konfiguriert ist, um den ersten Brückenarm (1111) und den zweiten Brückenarm (1112) zu steuern, um einen Stromkreis zum Entladen von der ersten Batteriezelle (121) zum Energiespeicherelement (1113) und einen Stromkreis zum Laden vom Energiespeicherelement (1113) und der ersten Batteriezelle (121) zur zweiten Batteriezelle (122) zu bilden und/oder um einen Stromkreis zum Entladen von der zweiten Batteriezelle (122) zum Energiespeicherelement (1113) und einen Stromkreis zum Laden von dem Energiespeicherelement (1113) und der zweiten Batteriezelle (122) zur ersten Batteriezelle (121) zu bilden, zum Beheizen der ersten Batteriezelle (121) und der zweiten Batteriezelle (122),
wobei das Steuermodul konfiguriert ist, um abwechselnd zwischen dem Stromkreis zum Entladen und dem Stromkreis zum Laden umzuschalten, wobei
ein erstes Ende des ersten Brückenarms (1111) mit einem ersten Ende der ersten Batteriezelle (121) verbunden ist, ein erstes Ende des zweiten Brückenarms (1112) mit einem ersten Ende der zweiten Batteriezelle (122) verbunden ist und ein zweites Ende des ersten Brückenarms (1111), ein zweites Ende des zweiten Brückenarms (1112) und ein zweites Ende der ersten Batteriezelle (121) mit einem zweiten Ende der zweiten Batteriezelle (122) verbunden sind, wobei der erste Brückenarm (1111) einen ersten Teilbrückenarm (1101) und einen zweiten Teilbrückenarm (1102) umfasst und der zweite Brückenarm (1112) einen dritten Teilbrückenarm (1103) und einen vierten Teilbrückenarm (1104) umfasst; und
das erste Ende der ersten Batteriezelle (121) eine positive Elektrode der ersten Batteriezelle (121) ist, das zweite Ende der ersten Batteriezelle (121) eine negative Elektrode der ersten Batteriezelle (121) ist, das erste Ende der zweiten Batteriezelle (122) eine positive Elektrode der zweiten Batteriezelle (122) ist und das zweite Ende der zweiten Batteriezelle (122) eine negative Elektrode der zweiten Batteriezelle (122) ist; oder das erste Ende der ersten Batteriezelle (121) eine negative Elektrode der ersten Batteriezelle (121) ist, das zweite Ende der ersten Batteriezelle (121) eine positive Elektrode der ersten Batteriezelle (121) ist, das erste Ende der zweiten Batteriezelle (122) eine negative Elektrode der zweiten Batteriezelle (122) ist und das zweite Ende der zweiten Batteriezelle (122) eine positive Elektrode der zweiten Batteriezelle (122) ist;
ein erstes Ende des Energiespeicherelements (1113) mit dem zweiten Ende des ersten Brückenarms (1111) verbunden ist und ein zweites Ende des Energiespeicherelements (1113) mit dem zweiten Ende des zweiten Brückenarms (1112) verbunden ist, oder ein erstes Ende des Energiespeicherelements (1113) mit dem ersten Ende des ersten Brückenarms (1111) verbunden ist und ein zweites Ende des Energiespeicherelements (1113) mit dem ersten Ende des zweiten Brückenarms (1112) verbunden ist;
wobei, wenn das erste Ende des Energiespeicherelements (1113) mit dem zweiten Ende des ersten Brückenarms (1111) verbunden ist und das zweite Ende des Energiespeicherelements (1113) mit dem zweiten Ende des zweiten Brückenarms (1112) verbunden ist, das Steuermodul speziell konfiguriert ist zum:
Steuern des ersten Teilbrückenarms (1101) und des vierten Teilbrückenarms (1104), so dass sie gleichzeitig eingeschaltet werden, um einen Stromkreis zu bilden, der die erste Batteriezelle (121), den ersten Teilbrückenarm (1101), das Energiespeicherelement (1113) und den vierten Teilbrückenarm (1104) umfasst, zum Entladen von der ersten Batteriezelle (121) zum Energiespeicherelement (1113); und
Steuern des ersten Teilbrückenarms (1101) und des dritten Teilbrückenarms (1103), so dass sie gleichzeitig eingeschaltet werden, um einen Stromkreis zu bilden, der die erste Batteriezelle (121), den ersten Teilbrückenarm (1101), das Energiespeicherelement (1113), den dritten Teilbrückenarm (1103) und die zweite Batteriezelle (122) umfasst, zum Laden von der ersten Batteriezelle (121) und dem Energiespeicherelement (1113) zur zweiten Batteriezelle (122);
und/oder
Steuern des zweiten Teilbrückenarms (1102) und des dritten Teilbrückenarms (1103), so dass sie gleichzeitig eingeschaltet werden, um einen Stromkreis zu bilden, der die zweite Batteriezelle (122), den dritten Teilbrückenarm (1103), das Energiespeicherelement (1113) und den zweiten Teilbrückenarm (1102) umfasst, zum Entladen von der zweiten Batteriezelle (122) zum Energiespeicherelement (1113); und
Steuern des ersten Teilbrückenarms (1101) und des dritten Teilbrückenarms (1103), so dass sie gleichzeitig eingeschaltet werden, um einen Stromkreis zu bilden, der die zweite Batteriezelle (122), den dritten Teilbrückenarm (1103), das Energiespeicherelement (1113), den ersten Teilbrückenarm (1101) und die erste Batteriezelle (121) umfasst, zum Laden von der zweiten Batteriezelle (122) und dem Energiespeicherelement (1113) zur ersten Batteriezelle (121); und
wobei, wenn das erste Ende des Energiespeicherelements (1113) mit dem ersten Ende des ersten Brückenarms (1111) verbunden ist und das zweite Ende des Energiespeicherelements (1113) mit dem ersten Ende des zweiten Brückenarms (1112) verbunden ist, das Steuermodul speziell konfiguriert ist zum:
Steuern des zweiten Teilbrückenarms (1102) und des dritten Teilbrückenarms (1103), so dass sie gleichzeitig eingeschaltet werden, um einen Stromkreis zu bilden, der die erste Batteriezelle (121), den zweiten Teilbrückenarm (1102), das Energiespeicherelement (1113) und den dritten Teilbrückenarm (1103) umfasst, zum Entladen von der ersten Batteriezelle (121) zum Energiespeicherelement (1113); und
Steuern des zweiten Teilbrückenarms (1102) und des vierten Teilbrückenarms (1104), so dass sie gleichzeitig eingeschaltet werden, um einen Stromkreis zu bilden, der die erste Batteriezelle (121), den zweiten Teilbrückenarm (1102), das Energiespeicherelement (1113), den vierten Teilbrückenarm (1104) und die zweite Batteriezelle (122) umfasst, zum Laden von der ersten Batteriezelle (121) und dem Energiespeicherelement (1113) zu der zweiten Batteriezelle (122);
und/oder
Steuern des ersten Teilbrückenarms (1101) und des vierten Teilbrückenarms (1104), so dass sie gleichzeitig eingeschaltet werden, um einen Stromkreis zu bilden, der die zweite Batteriezelle (122), den vierten Teilbrückenarm (1104), das Energiespeicherelement (1113) und den ersten Teilbrückenarm (1101) umfasst, zum Entladen von der zweiten Batteriezelle (122) zum Energiespeicherelement (1113); und
Steuern des zweiten Teilbrückenarms (1102) und des vierten Teilbrückenarms (1104), so dass sie gleichzeitig eingeschaltet werden, um einen Stromkreis zu bilden, der die zweite Batteriezelle (122), den vierten Teilbrückenarm (1104), das Energiespeicherelement (1113), den zweiten Teilbrückenarm (1102) und die erste Batteriezelle (121) umfasst, zum Laden von der zweiten Batteriezelle (122) und dem Energiespeicherelement (1113) zur ersten Batteriezelle (121).

2. System nach Anspruch 1, wobei
der erste Teilbrückenarm (1101) einen ersten Schalttransistor (V11) umfasst, der zweite Teilbrückenarm (1102) einen zweiten Schalttransistor (V12) umfasst, der dritte Teilbrückenarm (1103) einen dritten Schalttransistor (V13) umfasst und der vierte Teilbrückenarm (1104) einen vierten Schalttransistor (V14) umfasst,
wobei das Ein- und Ausschalten des ersten Teilbrückenarms (1101), des zweiten Teilbrückenarms (1102), des dritten Teilbrückenarms (1103) und des vierten Teilbrückenarms (1104) jeweils durch das Steuern des ersten Schalttransistors (V11), des zweiten Schalttransistors (V12), des dritten Schalttransistors (V13) und des vierten Schalttransistors (V14) implementiert wird.

3. System nach einem der Ansprüche 1 bis 2, wobei ein Zustandsumschalter zwischen dem ersten Ende der ersten Batteriezelle (121) und dem ersten Ende der zweiten Batteriezelle (122) verbunden ist oder ein Zustandsumschalter zwischen dem zweiten Ende der ersten Batteriezelle (121) und dem zweiten Ende der zweiten Batteriezelle (122) verbunden ist; und wobei das Steuerverfahren ferner Folgendes umfasst:
Steuern des Zustandsumschalters, damit dieser geöffnet wird, so dass die erste Batteriezelle (121) mit der zweiten Batteriezelle (122) in Reihe geschaltet ist.

4. System nach einem der Ansprüche 1 bis 3, wobei
das Energiespeicherelement (1113) eine Induktivität (L) umfasst; oder
das Energiespeicherelement (1113) eine Induktivität (L) und einen ersten Kondensator umfasst, die in Reihe geschaltet sind.

5. System nach einem der Ansprüche 1 bis 4, wobei ein zweiter Kondensator an beiden Enden parallel zur ersten Batteriezelle (121) geschaltet ist und ein dritter Kondensator an beiden Enden parallel zur zweiten Batteriezelle (122) geschaltet ist.

6. Steuerungsverfahren für eine Batterieheizvorrichtung (110), die mit einer Traktionsbatterie (120) verbunden und konfiguriert ist, um die Traktionsbatterie (120) zu beheizen, wobei die Batterieheizvorrichtung (110) einen ersten Brückenarm (1111), einen zweiten Brückenarm (1112) und ein Energiespeicherelement (1113) umfasst und die Traktionsbatterie (120) eine erste Batteriezelle (121) und eine zweite Batteriezelle (122) umfasst, wobei das Steuerungsverfahren Folgendes umfasst:
Steuern des ersten Brückenarms (1111) und des zweiten Brückenarms (1112), um einen Stromkreis zum Entladen von der ersten Batteriezelle (121) zum Energiespeicherelement (1113) und einen Stromkreis zum Laden vom Energiespeicherelement (1113) und der ersten Batteriezelle (121) zur zweiten Batteriezelle (122) zu bilden und/oder um einen Stromkreis zum Entladen von der zweiten Batteriezelle (122) zum Energiespeicherelement (1113) und einen Stromkreis zum Laden vom Energiespeicherelement (1113) und der zweiten Batteriezelle (122) zur ersten Batteriezelle (121) zu bilden, zum Beheizen der ersten Batteriezelle (121) und der zweiten Batteriezelle (122), wobei das Verfahren das Steuern des ersten Brückenarms (1111) und des zweiten Brückenarms (1112) umfasst, um abwechselnd zwischen dem Stromkreis zum Entladen und dem Stromkreis zum Laden umzuschalten, wobei:
ein erstes Ende des ersten Brückenarms (1111) mit einem ersten Ende der ersten Batteriezelle (121) verbunden ist, ein erstes Ende des zweiten Brückenarms (1112) mit einem ersten Ende der zweiten Batteriezelle (122) verbunden ist und ein zweites Ende des ersten Brückenarms (1111), ein zweites Ende des zweiten Brückenarms (1112) und ein zweites Ende der ersten Batteriezelle (121) mit einem zweiten Ende der zweiten Batteriezelle (122) verbunden sind, wobei der erste Brückenarm (1111) einen ersten Teilbrückenarm (1101) und einen zweiten Teilbrückenarm (1102) umfasst und der zweite Brückenarm (1112) einen dritten Teilbrückenarm (1103) und einen vierten Teilbrückenarm (1104) umfasst; und
das erste Ende der ersten Batteriezelle (121) und das erste Ende der zweiten Batteriezelle (122) positive Elektroden sind und das zweite Ende der ersten Batteriezelle (121) und das zweite Ende der zweiten Batteriezelle (122) negative Elektroden sind; oder das erste Ende der ersten Batteriezelle (121) und das erste Ende der zweiten Batteriezelle (122) negative Elektroden sind und das zweite Ende der ersten Batteriezelle (121) und das zweite Ende der zweiten Batteriezelle (122) positive Elektroden sind;
wobei ein erstes Ende des Energiespeicherelements (1113) mit dem zweiten Ende des ersten Brückenarms (1111) verbunden ist und ein zweites Ende des Energiespeicherelements (1113) mit dem zweiten Ende des zweiten Brückenarms (1112) verbunden ist, oder ein erstes Ende des Energiespeicherelements (1113) mit dem ersten Ende des ersten Brückenarms (1111) verbunden ist und ein zweites Ende des Energiespeicherelements (1113) mit dem ersten Ende des zweiten Brückenarms (1112) verbunden ist;
und
wobei, wenn das erste Ende des Energiespeicherelements (1113) mit dem zweiten Ende des ersten Brückenarms (1111) verbunden ist und das zweite Ende des Energiespeicherelements (1113) mit dem zweiten Ende des zweiten Brückenarms (1112) verbunden ist, das Steuern des ersten Brückenarms (1111) und des zweiten Brückenarms (1112) Folgendes umfasst:
Empfangen einer Heizanforderungsnachricht; und
Erzeugen eines ersten Steuersignals basierend auf der Heizanforderungsnachricht, wobei das erste Steuersignal verwendet wird zum:
Steuern des ersten Teilbrückenarms (1101) und des vierten Teilbrückenarms (1104), so dass sie gleichzeitig eingeschaltet werden, um einen Stromkreis zu bilden, der die erste Batteriezelle (121), den ersten Teilbrückenarm (1101), das Energiespeicherelement (1113) und den vierten Teilbrückenarm (1104) umfasst, zum Entladen von der ersten Batteriezelle (121) zum Energiespeicherelement (1113); und
Steuern des ersten Teilbrückenarms (1101) und des dritten Teilbrückenarms (1103), so dass sie gleichzeitig eingeschaltet werden, um einen Stromkreis zu bilden, der die erste Batteriezelle (121), den ersten Teilbrückenarm (1101), das Energiespeicherelement (1113), den dritten Teilbrückenarm (1103) und die zweite Batteriezelle (122) umfasst, zum Laden von der ersten Batteriezelle (121) und dem Energiespeicherelement (1113) zur zweiten Batteriezelle (122);
und/oder
Steuern des zweiten Teilbrückenarms (1102) und des dritten Teilbrückenarms (1103), so dass sie gleichzeitig eingeschaltet werden, um einen Stromkreis zu bilden, der die zweite Batteriezelle (122), den dritten Teilbrückenarm (1103), das Energiespeicherelement (1113) und den zweiten Teilbrückenarm (1102) umfasst, zum Entladen von der zweiten Batteriezelle (122) zum Energiespeicherelement (1113); und
Steuern des ersten Teilbrückenarms (1101) und des dritten Teilbrückenarms (1103), so dass sie gleichzeitig eingeschaltet werden, um einen Stromkreis zu bilden, der die zweite Batteriezelle (122), den dritten Teilbrückenarm (1103), das Energiespeicherelement (1113), den ersten Teilbrückenarm (1101) und die erste Batteriezelle (121) umfasst, zum Laden von der zweiten Batteriezelle (122) und dem Energiespeicherelement (1113) zur ersten Batteriezelle (121); und
wobei, wenn das erste Ende des Energiespeicherelements (1113) mit dem ersten Ende des ersten Brückenarms (1111) verbunden ist und das zweite Ende des Energiespeicherelements (1113) mit dem ersten Ende des zweiten Brückenarms (1112) verbunden ist, das Steuern des ersten Brückenarms (1111) und des zweiten Brückenarms (1112) Folgendes umfasst:
Empfangen einer Heizanforderungsnachricht; und
Erzeugen eines dritten Steuersignals basierend auf der Heizanforderungsnachricht, wobei das dritte Steuersignal verwendet wird zum:
Steuern des zweiten Teilbrückenarms (1102) und des dritten Teilbrückenarms (1103), so dass sie gleichzeitig eingeschaltet werden, um einen Stromkreis zu bilden, der die erste Batteriezelle (121), den zweiten Teilbrückenarm (1102), das Energiespeicherelement (1113) und den dritten Teilbrückenarm (1103) umfasst, zum Entladen von der ersten Batteriezelle (121) zum Energiespeicherelement (1113); und
Steuern des zweiten Teilbrückenarms (1102) und des vierten Teilbrückenarms (1104), so dass sie gleichzeitig eingeschaltet werden, um einen Stromkreis zu bilden, der die erste Batteriezelle (121), den zweiten Teilbrückenarm (1102), das Energiespeicherelement (1113), den vierten Teilbrückenarm (1104) und die zweite Batteriezelle (122) umfasst, zum Laden von der ersten Batteriezelle (121) und dem Energiespeicherelement (1113) zu der zweiten Batteriezelle (122);
und/oder
Steuern des ersten Teilbrückenarms (1101) und des vierten Teilbrückenarms (1104), so dass sie gleichzeitig eingeschaltet werden, um einen Stromkreis zu bilden, der die zweite Batteriezelle (122), den vierten Teilbrückenarm (1104), das Energiespeicherelement (1113) und den ersten Teilbrückenarm (1101) umfasst, zum Entladen von der zweiten Batteriezelle (122) zum Energiespeicherelement (1113); und
Steuern des zweiten Teilbrückenarms (1102) und des vierten Teilbrückenarms (1104), so dass sie gleichzeitig eingeschaltet werden, um einen Stromkreis zu bilden, der die zweite Batteriezelle (122), den vierten Teilbrückenarm (1104), das Energiespeicherelement (1113), den zweiten Teilbrückenarm (1102) und die erste Batteriezelle (121) umfasst, zum Laden von der zweiten Batteriezelle (122) und dem Energiespeicherelement (1113) zur ersten Batteriezelle (121).

7. Steuerungsverfahren nach Anspruch 6, wobei das Steuerungsverfahren ferner Folgendes umfasst:
Empfangen einer Heizstoppnachricht; und
Erzeugen eines zweiten Steuersignals basierend auf der Heizstoppnachricht, wobei das zweite Steuersignal verwendet wird, um die Batterieheizvorrichtung (110) so zu steuern, dass sie das Beheizen der Traktionsbatterie (120) stoppt.

8. Steuerungsverfahren nach einem der Ansprüche 6 bis 7, wobei
der erste Teilbrückenarm (1101) einen ersten Schalttransistor (V11) umfasst, der zweite Teilbrückenarm (1102) einen zweiten Schalttransistor (V12) umfasst, der dritte Teilbrückenarm (1103) einen dritten Schalttransistor (V13) umfasst und der vierte Teilbrückenarm (1104) einen vierten Schalttransistor (V14) umfasst,
wobei das Ein- und Ausschalten des ersten Teilbrückenarms (1101), des zweiten Teilbrückenarms (1102), des dritten Teilbrückenarms (1103) und des vierten Teilbrückenarms (1104) jeweils durch das Steuern des ersten Schalttransistors (V11), des zweiten Schalttransistors (V12), des dritten Schalttransistors (V13) und des vierten Schalttransistors (V14) implementiert wird.

9. Steuerungsverfahren nach einem der Ansprüche 6 bis 8, wobei ein Zustandsumschalter zwischen dem ersten Ende der ersten Batteriezelle (121) und dem ersten Ende der zweiten Batteriezelle (122) verbunden ist oder ein Zustandsumschalter zwischen dem zweiten Ende der ersten Batteriezelle (121) und dem zweiten Ende der zweiten Batteriezelle (122) verbunden ist; und wobei das Steuerverfahren ferner Folgendes umfasst:
Steuern des Zustandsumschalters, damit dieser geöffnet wird, so dass die erste Batteriezelle (121) mit der zweiten Batteriezelle (122) in Reihe geschaltet ist.

10. Steuerungsverfahren nach einem der Ansprüche 6 bis 9, wobei
das Energiespeicherelement (1113) eine Induktivität (L) umfasst; oder
das Energiespeicherelement (1113) eine Induktivität (L) und einen ersten Kondensator umfasst, die in Reihe geschaltet sind.

11. Steuerungsverfahren nach einem der Ansprüche 6 bis 10, wobei ein zweiter Kondensator an beiden Enden parallel zur ersten Batteriezelle (121) geschaltet ist und ein dritter Kondensator an beiden Enden parallel zur zweiten Batteriezelle (122) geschaltet ist.

12. Steuerungsverfahren nach einem der Ansprüche 6 bis 11, wobei die erste Batteriezelle (121) und die zweite Batteriezelle (122) ferner mit einer Anstriebsschaltung (131) eines Motors (130) verbunden sind, um die Antriebsschaltung (131) mit Strom zu versorgen.

13. Leistungsvorrichtung, umfassend:
ein System nach einem der Ansprüche 1 bis 5; und
einen Motor (130), wobei eine Anstriebsschaltung (131) des Motors (130) mit der Traktionsbatterie (120) verbunden ist und die Traktionsbatterie (120) konfiguriert ist, um die Anstriebsschaltung (131) mit Strom zu versorgen.

## Revendications

1. Système comprenant un dispositif de chauffage de batterie (110) et une batterie de traction, le dispositif de chauffage de batterie (110) étant raccordé à une batterie de traction (120) et conçu pour chauffer la batterie de traction (120), et la batterie de traction (120) comprenant une première cellule de batterie (121) et une deuxième cellule de batterie (122), le dispositif de chauffage de batterie (110) comprenant :
un module de chauffage (1110) comprenant une première branche de pont (1111), une deuxième branche de pont (1112) et un élément de stockage d'énergie (1113) ; et
un module de commande (1120) conçu pour commander la première branche de pont (1111) et la deuxième branche de pont (1112), pour former un circuit destiné à décharger depuis la première cellule de batterie (121) vers l'élément de stockage d'énergie (1113) et un circuit destiné à charger depuis l'élément de stockage d'énergie (1113) et la première cellule de batterie (121) vers la deuxième cellule de batterie (122), et/ou pour former un circuit destiné à décharger depuis la deuxième cellule de batterie (122) vers l'élément de stockage d'énergie (1113) et un circuit destiné à charger depuis l'élément de stockage d'énergie (1113) et la deuxième cellule de batterie (122) vers la première cellule de batterie (121), pour le chauffage de la première cellule de batterie (121) et la deuxième cellule de batterie (122),
dans lequel le module de commande est conçu pour commuter entre le circuit destiné à décharger et le circuit destiné à charger de manière alternée, dans lequel
une première extrémité de la première branche de pont (1111) est raccordée à une première extrémité de la première cellule de batterie (121), une première extrémité de la deuxième branche de pont (1112) est raccordée à une première extrémité de la deuxième cellule de batterie (122) et une deuxième extrémité de la première branche de pont (1111), une deuxième extrémité de la deuxième branche de pont (1112) et une deuxième extrémité de la première cellule de batterie (121) sont raccordées à une deuxième extrémité de la deuxième cellule de batterie (122), la première branche de pont (1111) comprenant une première sous-branche de pont (1101) et une deuxième sous-branche de pont (1102), et la deuxième branche de pont (1112) comprenant une troisième sous-branche de pont (1103) et une quatrième sous-branche de pont (1104) ; et
la première extrémité de la première cellule de batterie (121) est une électrode positive de la première cellule de batterie (121), la deuxième extrémité de la première cellule de batterie (121) est une électrode négative de la première cellule de batterie (121), la première extrémité de la deuxième cellule de batterie (122) est une électrode positive de la deuxième cellule de batterie (122), et la deuxième extrémité de la deuxième cellule de batterie (122) est une électrode négative de la deuxième cellule de batterie (122) ; ou la première extrémité de la première cellule de batterie (121) est une électrode négative de la première cellule de batterie (121), la deuxième extrémité de la première cellule de batterie (121) est une électrode positive de la première cellule de batterie (121), la première extrémité de la deuxième cellule de batterie (122) est une électrode négative de la deuxième cellule de batterie (122), et la deuxième extrémité de la deuxième cellule de batterie (122) est une électrode positive de la deuxième cellule de batterie (122) ;
une première extrémité de l'élément de stockage d'énergie (1113) est raccordée à la deuxième extrémité de la première branche de pont (1111), et une deuxième extrémité de l'élément de stockage d'énergie (1113) est raccordée à la deuxième extrémité de la deuxième branche de pont (1112), ou une première extrémité de l'élément de stockage d'énergie (1113) est raccordée à la première extrémité de la première branche de pont (1111), et une deuxième extrémité de l'élément de stockage d'énergie (1113) est raccordée à la première extrémité de la deuxième branche de pont (1112) ;
dans lequel, lorsque la première extrémité de l'élément de stockage d'énergie (1113) est raccordée à la deuxième extrémité de la première branche de pont (1111) et la deuxième extrémité de l'élément de stockage d'énergie (1113) est raccordée à la deuxième extrémité de la deuxième branche de pont (1112), le module de commande est spécifiquement conçu pour :
commander la première sous-branche de pont (1101) et la quatrième sous-branche de pont (1104) afin qu'elles soient commutées en même temps, pour former un circuit, lequel comprend la première cellule de batterie (121), la première sous-branche de pont (1101), l'élément de stockage d'énergie (1113) et la quatrième sous-branche de pont (1104), pour décharger depuis la première cellule de batterie (121) vers l'élément de stockage d'énergie (1113) ; et
commander la première sous-branche de pont (1101) et la troisième sous-branche de pont (1103) afin qu'elles soient commutées en même temps, pour former un circuit, lequel comprend la première cellule de batterie (121), la première sous-branche de pont (1101), l'élément de stockage d'énergie (1113), la troisième sous-branche de pont (1103) et la deuxième cellule de batterie (122), pour charger depuis la première cellule de batterie (121) et l'élément de stockage d'énergie (1113) vers la deuxième cellule de batterie (122) ;
et/ou
commander la deuxième sous-branche de pont (1102) et la troisième sous-branche de pont (1103) afin qu'elles soient commutées en même temps, pour former un circuit, lequel comprend la deuxième cellule de batterie (122), la troisième sous-branche de pont (1103), l'élément de stockage d'énergie (1113) et la deuxième sous-branche de pont (1102), pour décharger depuis la deuxième cellule de batterie (122) vers l'élément de stockage d'énergie (1113) ; et
commander la première sous-branche de pont (1101) et la troisième sous-branche de pont (1103) afin qu'elles soient commutées en même temps, pour former un circuit, lequel comprend la deuxième cellule de batterie (122), la troisième sous-branche de pont (1103), l'élément de stockage d'énergie (1113), la première sous-branche de pont (1101) et la première cellule de batterie (121), pour charger depuis la deuxième cellule de batterie (122) et l'élément de stockage d'énergie (1113) vers la première cellule de batterie (121) ; et
dans lequel, lorsque la première extrémité de l'élément de stockage d'énergie (1113) est raccordée à la première extrémité de la première branche de pont (1111) et la deuxième extrémité de l'élément de stockage d'énergie (1113) est raccordée à la première extrémité de la deuxième branche de pont (1112), le module de commande est spécifiquement conçu pour :
commander la deuxième sous-branche de pont (1102) et la troisième sous-branche de pont (1103) afin qu'elles soient commutées en même temps, pour former un circuit, lequel comprend la première cellule de batterie (121), la deuxième sous-branche de pont (1102), l'élément de stockage d'énergie (1113) et la troisième sous-branche de pont (1103), pour décharger depuis la première cellule de batterie (121) vers l'élément de stockage d'énergie (1113) ; et
commander la deuxième sous-branche de pont (1102) et la quatrième sous-branche de pont (1104) afin qu'elles soient commutées en même temps, pour former un circuit, lequel comprend la première cellule de batterie (121), la deuxième sous-branche de pont (1102), l'élément de stockage d'énergie (1113), la quatrième sous-branche de pont (1104) et la deuxième cellule de batterie (122), pour charger depuis la première cellule de batterie (121) et l'élément de stockage d'énergie (1113) vers la deuxième cellule de batterie (122) ;
et/ou
commander la première sous-branche de pont (1101) et la quatrième sous-branche de pont (1104) afin qu'elles soient commutées en même temps, pour former un circuit, lequel comprend la deuxième cellule de batterie (122), la quatrième sous-branche de pont (1104), l'élément de stockage d'énergie (1113) et la première sous-branche de pont (1101), pour décharger depuis la deuxième cellule de batterie (122) vers l'élément de stockage d'énergie (1113) ; et
commander la deuxième sous-branche de pont (1102) et la quatrième sous-branche de pont (1104) afin qu'elles soient commutées en même temps, pour former un circuit, lequel comprend la deuxième cellule de batterie (122), la quatrième sous-branche de pont (1104), l'élément de stockage d'énergie (1113), la deuxième sous-branche de pont (1102) et la première cellule de batterie (121), pour charger depuis la deuxième cellule de batterie (122) et l'élément de stockage d'énergie (1113) vers la première cellule de batterie (121).

2. Système selon la revendication 1, dans lequel
la première sous-branche de pont (1101) comprend un premier transistor de commutation (V11), la deuxième sous-branche de pont (1102) comprend un deuxième transistor de commutation (V12), la troisième sous-branche de pont (1103) comprend un troisième transistor de commutation (V13), et la quatrième sous-branche de pont (1104) comprend un quatrième transistor de commutation (V14),
dans lequel la commutation ouverte et fermée de la première sous-branche de pont (1101), la deuxième sous-branche de pont (1102), la troisième sous-branche de pont (1103) et la quatrième sous-branche de pont (1104) sont respectivement mises en œuvre en commandant le premier transistor de commutation (V11), le deuxième transistor de commutation (V12), le troisième transistor de commutation (V13) et le quatrième transistor de commutation (V14).

3. Système selon l'une quelconque des revendications 1 à 2, dans lequel un commutateur de commutation d'état est raccordé entre la première extrémité de la première cellule de batterie (121) et la première extrémité de la deuxième cellule de batterie (122), ou un commutateur de commutation d'état est raccordé entre la deuxième extrémité de la première cellule de batterie (121) et la deuxième extrémité de la deuxième cellule de batterie (122) ; et dans lequel le procédé de commande comprend en outre les étapes consistant à :
commander le commutateur de commutation d'état afin qu'il soit ouvert, de telle sorte que la première cellule de batterie (121) est raccordée en série avec la deuxième cellule de batterie (122).

4. Système selon l'une quelconque des revendications 1 à 3, dans lequel
l'élément de stockage d'énergie (1113) comprend un inducteur (L) ; ou
l'élément de stockage d'énergie (1113) comprend un inducteur (L) et un premier condensateur raccordés en série.

5. Système selon l'une quelconque des revendications 1 à 4, dans lequel un deuxième condensateur est raccordé en parallèle à la première cellule de batterie (121) au niveau des deux extrémités, et un troisième condensateur est raccordé en parallèle à la deuxième cellule de batterie (122) au niveau des deux extrémités.

6. Procédé de commande destiné à un dispositif de chauffage de batterie (110), qui est raccordé à une batterie de traction (120) et conçu pour chauffer la batterie de traction (120), dans lequel le dispositif de chauffage de batterie (110) comprend une première branche de pont (1111), une deuxième branche de pont (1112) et un élément de stockage d'énergie (1113), et la batterie de traction (120) comprend une première cellule de batterie (121) et une deuxième cellule de batterie (122), le procédé de commande comprenant les étapes consistant à :
commander la première branche de pont (1111) et la deuxième branche de pont (1112), pour former un circuit destiné à décharger depuis la première cellule de batterie (121) vers l'élément de stockage d'énergie (1113) et un circuit destiné à charger depuis l'élément de stockage d'énergie (1113) et la première cellule de batterie (121) vers la deuxième cellule de batterie (122), et/ou pour former un circuit destiné à décharger depuis la deuxième cellule de batterie (122) vers l'élément de stockage d'énergie (1113) et un circuit destiné à charger depuis l'élément de stockage d'énergie (1113) et la deuxième cellule de batterie (122) vers la première cellule de batterie (121), pour le chauffage de la première cellule de batterie (121) et la deuxième cellule de batterie (122), dans laquelle le procédé comprend une étape consistant à commander la première branche de pont (1111) et la deuxième branche de pont (1112) afin qu'elles commutent entre le circuit destiné à décharger et le circuit destiné à charger de manière alternée, dans lequel :
une première extrémité de la première branche de pont (1111) est raccordée à une première extrémité de la première cellule de batterie (121), une première extrémité de la deuxième branche de pont (1112) est raccordée à une première extrémité de la deuxième cellule de batterie (122) et une deuxième extrémité de la première branche de pont (1111), une deuxième extrémité de la deuxième branche de pont (1112) et une deuxième extrémité de la première cellule de batterie (121) sont raccordées à une deuxième extrémité de la deuxième cellule de batterie (122), la première branche de pont (1111) comprenant une première sous-branche de pont (1101) et une deuxième sous-branche de pont (1102), et la deuxième branche de pont (1112) comprenant une troisième sous-branche de pont (1103) et une quatrième sous-branche de pont (1104) ; et
la première extrémité de la première cellule de batterie (121) et la première extrémité de la deuxième cellule de batterie (122) sont des électrodes positives, et la deuxième extrémité de la première cellule de batterie (121) et la deuxième extrémité de la deuxième cellule de batterie (122) sont des électrodes négatives ; ou la première extrémité de la première cellule de batterie (121) et la première extrémité de la deuxième cellule de batterie (122) sont des électrodes négatives, et la deuxième extrémité de la première cellule de batterie (121) et la deuxième extrémité de la deuxième cellule de batterie (122) sont des électrodes positives ;
dans lequel une première extrémité de l'élément de stockage d'énergie (1113) est raccordée à la deuxième extrémité de la première branche de pont (1111), et une deuxième extrémité de l'élément de stockage d'énergie (1113) est raccordée à la deuxième extrémité de la deuxième branche de pont (1112), ou une première extrémité de l'élément de stockage d'énergie (1113) est raccordée à la première extrémité de la première branche de pont (1111), et une deuxième extrémité de l'élément de stockage d'énergie (1113) est raccordée à la première extrémité de la deuxième branche de pont (1112) ;
et
dans lequel, lorsque la première extrémité de l'élément de stockage d'énergie (1113) est raccordée à la deuxième extrémité de la première branche de pont (1111) et la deuxième extrémité de l'élément de stockage d'énergie (1113) est raccordée à la deuxième extrémité de la deuxième branche de pont (1112), la commande de la première branche de pont (1111) et la deuxième branche de pont (1112) comprend les étapes consistant à :
recevoir un message de demande de chauffage ; et
générer un premier signal de commande sur la base du message de demande de chauffage, le premier signal de commande étant utilisé pour :
commander la première sous-branche de pont (1101) et la quatrième sous-branche de pont (1104) afin qu'elles soient commutées en même temps, pour former un circuit, lequel comprend la première cellule de batterie (121), la première sous-branche de pont (1101), l'élément de stockage d'énergie (1113) et la quatrième sous-branche de pont (1104), pour décharger depuis la première cellule de batterie (121) vers l'élément de stockage d'énergie (1113) ; et
commander la première sous-branche de pont (1101) et la troisième sous-branche de pont (1103) afin qu'elles soient commutées en même temps, pour former un circuit, lequel comprend la première cellule de batterie (121), la première sous-branche de pont (1101), l'élément de stockage d'énergie (1113), la troisième sous-branche de pont (1103) et la deuxième cellule de batterie (122), pour charger depuis la première cellule de batterie (121) et l'élément de stockage d'énergie (1113) vers la deuxième cellule de batterie (122) ;
et/ou
commander la deuxième sous-branche de pont (1102) et la troisième sous-branche de pont (1103) afin qu'elles soient commutées en même temps, pour former un circuit, lequel comprend la deuxième cellule de batterie (122), la troisième sous-branche de pont (1103), l'élément de stockage d'énergie (1113) et la deuxième sous-branche de pont (1102), pour décharger depuis la deuxième cellule de batterie (122) vers l'élément de stockage d'énergie (1113) ; et
commander la première sous-branche de pont (1101) et la troisième sous-branche de pont (1103) afin qu'elles soient commutées en même temps, pour former un circuit, lequel comprend la deuxième cellule de batterie (122), la troisième sous-branche de pont (1103), l'élément de stockage d'énergie (1113), la première sous-branche de pont (1101) et la première cellule de batterie (121), pour charger depuis la deuxième cellule de batterie (122) et l'élément de stockage d'énergie (1113) vers la première cellule de batterie (121) ; et
dans lequel, lorsque la première extrémité de l'élément de stockage d'énergie (1113) est raccordée à la première extrémité de la première branche de pont (1111) et la deuxième extrémité de l'élément de stockage d'énergie (1113) est raccordée à la première extrémité de la deuxième branche de pont (1112), la commande de la première branche de pont (1111) et la deuxième branche de pont (1112) comprend les étapes consistant à :
recevoir un message de demande de chauffage ; et
générer un troisième signal de commande sur la base du message de demande de chauffage, le troisième signal de commande étant utilisé pour :
commander la deuxième sous-branche de pont (1102) et la troisième sous-branche de pont (1103) afin qu'elles soient commutées en même temps, pour former un circuit, lequel comprend la première cellule de batterie (121), la deuxième sous-branche de pont (1102), l'élément de stockage d'énergie (1113) et la troisième sous-branche de pont (1103), pour décharger depuis la première cellule de batterie (121) vers l'élément de stockage d'énergie (1113) ; et
commander la deuxième sous-branche de pont (1102) et la quatrième sous-branche de pont (1104) afin qu'elles soient commutées en même temps, pour former un circuit, lequel comprend la première cellule de batterie (121), la deuxième sous-branche de pont (1102), l'élément de stockage d'énergie (1113), la quatrième sous-branche de pont (1104) et la deuxième cellule de batterie (122), pour charger depuis la première cellule de batterie (121) et l'élément de stockage d'énergie (1113) vers la deuxième cellule de batterie (122) ;
et/ou
commander la première sous-branche de pont (1101) et la quatrième sous-branche de pont (1104) afin qu'elles soient commutées en même temps, pour former un circuit, lequel comprend la deuxième cellule de batterie (122), la quatrième sous-branche de pont (1104), l'élément de stockage d'énergie (1113) et la première sous-branche de pont (1101), pour décharger depuis la deuxième cellule de batterie (122) vers l'élément de stockage d'énergie (1113) ; et
commander la deuxième sous-branche de pont (1102) et la quatrième sous-branche de pont (1104) afin qu'elles soient commutées en même temps, pour former un circuit, lequel comprend la deuxième cellule de batterie (122), la quatrième sous-branche de pont (1104), l'élément de stockage d'énergie (1113), la deuxième sous-branche de pont (1102) et la première cellule de batterie (121), pour charger depuis la deuxième cellule de batterie (122) et l'élément de stockage d'énergie (1113) vers la première cellule de batterie (121).

7. Procédé de commande selon la revendication 6, le procédé de commande comprenant en outre les étapes consistant à :
recevoir un message d'arrêt de chauffage ; et
générer un deuxième signal de commande sur la base du message d'arrêt de chauffage, le deuxième signal de commande étant utilisé pour commander le dispositif de chauffage de batterie (110) afin qu'il arrête de chauffer la batterie de traction (120).

8. Procédé de commande selon l'une quelconque des revendications 6 à 7, dans lequel
la première sous-branche de pont (1101) comprend un premier transistor de commutation (V11), la deuxième sous-branche de pont (1102) comprend un deuxième transistor de commutation (V12), la troisième sous-branche de pont (1103) comprend un troisième transistor de commutation (V13), et la quatrième sous-branche de pont (1104) comprend un quatrième transistor de commutation (V14),
dans lequel la commutation ouverte et fermée de la première sous-branche de pont (1101), la deuxième sous-branche de pont (1102), la troisième sous-branche de pont (1103) et la quatrième sous-branche de pont (1104) sont respectivement mises en œuvre en commandant le premier transistor de commutation (V11), le deuxième transistor de commutation (V12), le troisième transistor de commutation (V13) et le quatrième transistor de commutation (V14).

9. Procédé de commande selon l'une quelconque des revendications 6 à 8, dans lequel un commutateur de commutation d'état est raccordé entre la première extrémité de la première cellule de batterie (121) et la première extrémité de la deuxième cellule de batterie (122), ou un commutateur de commutation d'état est raccordé entre la deuxième extrémité de la première cellule de batterie (121) et la deuxième extrémité de la deuxième cellule de batterie (122) ; et dans lequel le procédé de commande comprend en outre les étapes consistant à :
commander le commutateur de commutation d'état afin qu'il soit ouvert, de telle sorte que la première cellule de batterie (121) est raccordée en série avec la deuxième cellule de batterie (122).

10. Procédé de commande selon l'une quelconque des revendications 6 à 9, dans lequel
l'élément de stockage d'énergie (1113) comprend un inducteur (L) ; ou
l'élément de stockage d'énergie (1113) comprend un inducteur (L) et un premier condensateur raccordés en série.

11. Procédé de commande selon l'une quelconque des revendications 6 à 10, dans lequel un deuxième condensateur est raccordé en parallèle à la première cellule de batterie (121) au niveau des deux extrémités, et un troisième condensateur est raccordé en parallèle à la deuxième cellule de batterie (122) au niveau des deux extrémités.

12. Procédé de commande selon l'une quelconque des revendications 6 à 11, dans lequel la première cellule de batterie (121) et la deuxième cellule de batterie (122) sont en outre raccordées à un circuit d'entraînement (131) d'un moteur (130), pour fournir une alimentation au circuit d'entraînement (131).

13. Dispositif électrique, comprenant :
un système selon l'une quelconque des revendications 1 à 5 ; et
un moteur (130), un circuit d'entraînement (131) du moteur (130) étant raccordé à la batterie de traction (120), et la batterie de traction (120) étant conçue pour fournir de l'électricité au circuit d'entraînement (131).
